# EUROPEAN PATENT APPLICATION

(11) **EP 2 416 273 A1**
(43) Date of publication of application: **08.02.2012**
(21) Application number: 09842916.0
(22) Date of filing: 30.03.2009
(51) Int. Cl.: G06F 21/20

(54) **ACCESS AUTHENTICATION METHOD AND INFORMATION PROCESSOR**

(71) Applicant: Fujitsu Limited, Kawasaki-shi, Kanagawa 211-8588 (JP)
(72) Inventor: MASHIMO, Masashi, Kawasaki-shi Kanagawa 211-8588 (JP)
(74) Representative: Ward, James Norman
(86) International application number: PCT/JP2009/001467
(87) International publication number: WO 2010/116404

(57) **Abstract**

An account information operation terminal device is registered in advance in a system that performs access authentication based on account information. The system manages the account information operation terminal device registered in the system based on registered terminal information. The system uses the registered terminal information to permit only the account information operation terminal device registered in advance in the system to operate the account information.

## Description

### Technical Field

The present invention relates to an access authentication method in an IT (Information Technology) system and an information processing apparatus using the access authentication method.

### Background Art

Various computer systems (information processing systems), such as a server as an information processing apparatus belonging to a corporate network and a personal computer as a terminal device connected to the server, need to include access authentication mechanisms for ensuring the security of managed data when the data is accessed. A technique of login authentication is known as a method of establishing the access authentication mechanism. A user ID and a password of an account and the like are generally used in the login authentication. In this case, the user ID is used as identification information of the user, and the password is used as authentication information for confirming that the user is a normal user.

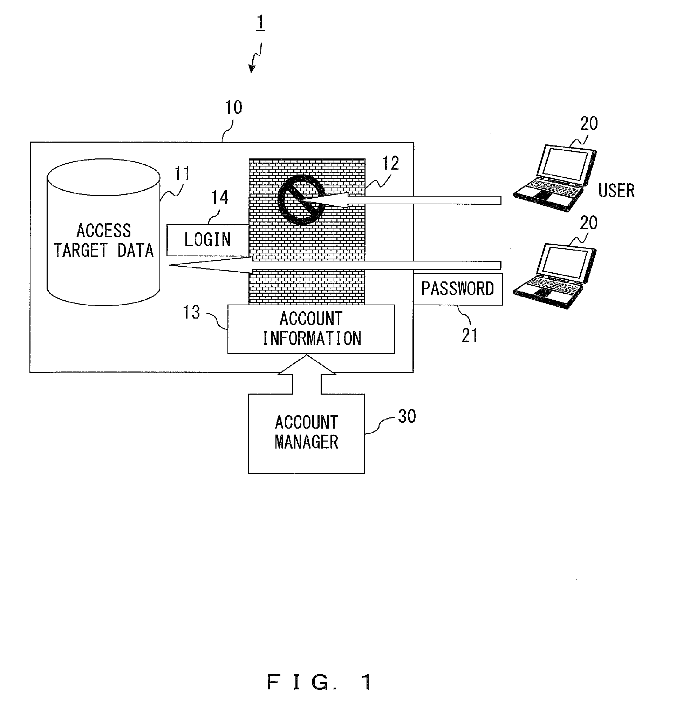

Figure 1 is a schematic diagram showing an example of configuration of a computer system of a client/server model including the access authentication mechanism.
A computer system 1 shown in Figure 1 includes a password management system 10, a plurality of terminal devices 20 connected to the password management system 10 via a network (not shown), a console directly connected to the password management system 10, and the like.

The password management system 10 includes access target data 11, a login account mechanism 12 that carries out access authentication of the access target data 11, and the like. The access target data 11 is stored in an external storage device included in a server (not shown) arranged in the password management system 10. The access target data 11 can be used by logging in to the server 11 from the console or the terminal device 20. The login is performed by inputting a user ID and a password. The access to the access target data 11 is permitted only to the user who is confirmed as a normal user by the login.

The login account mechanism 12 performs login authentication of the user (system user) logging in from the console or the terminal device 20 and determines whether the logged in user is a normal user. Access to the access target data 11 is permitted only to the user who is determined to be a normal user. The login account mechanism 12 uses account information 13 set by an account manager 30 from the console to perform the login authentication. The account information 13 includes a password and the like and is uniquely set for each terminal device 20. When there is a login input from the terminal device 20 or the console, the login account mechanism 12 compares a password 21 inputted from the terminal device 20 or the console to the passwords registered in advance in association with the terminal devices 20 and the consoles and permits a login 14 only when the passwords match. Therefore, the user of the terminal device 20 or the console (hereinafter, called "system user" or "user") can access the access target data 11 only when the login 14 is permitted. In this way, the login account mechanism 12 determines the correctness of the password inputted at the login to ensure the security of the access to the access target data 11 by the user of the terminal device 20 or the console.

In the computer system 1 including the access authentication mechanism, the access to the access target data 11 is impossible if the system user forgets the password 21. Therefore, the system user who forgets the password 21 needs to query the account manager 30 for the password 21 of the system user or needs to request resetting of the password. The query for the password 21 or the reset of password is performed by, for example, the following methods of (1) and (2).

### (1) Query for Password

The account manager 30 uses a network or mail to notify the system user of the password.

### (2) Reset of Password

The identity of the user is verified, and the password is initialized (deleted) after the confirmation of the user. Then, a new password is set.

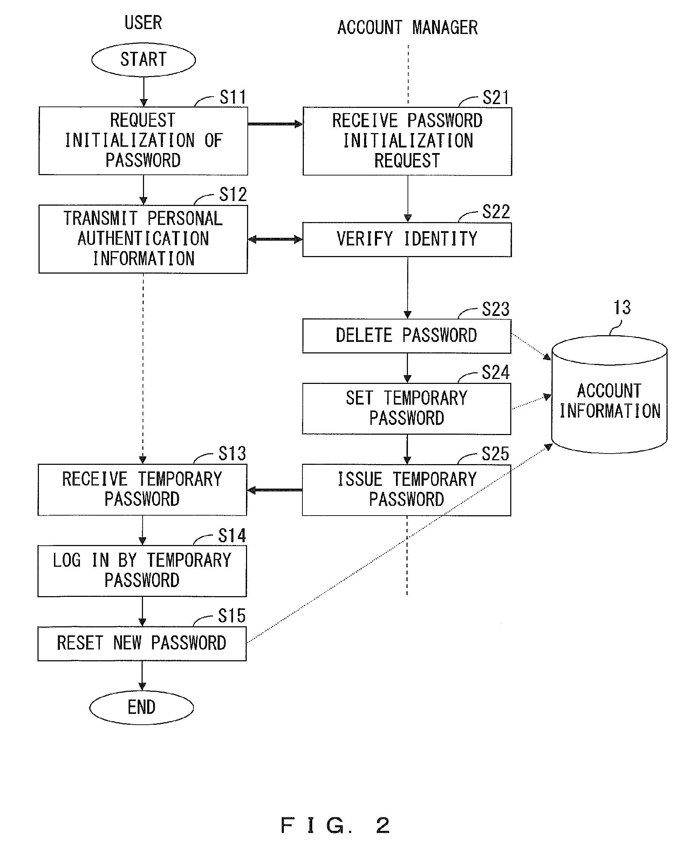

Figure 2 is a flow chart showing a conventional processing procedure of resetting the password when the user forgets the password. The left side of Figure 2 is a flow chart showing a processing procedure of the user, and the right side of Figure 2 is a flow chart showing a processing procedure of the account manager.

The flow chart shown in Figure 2 will be described.
The user 20 transmits a "password initialization request" to the account manager 30 (step S11). The account manager 30 receives the password initialization request (step S21). The account manager 30 verifies the identity of the user 20 who has transmitted the password initialization request (step S22). In the identify verification process, the user 20 sends personal authentication information of the user 20 to the account manager 30 in response to a request from the account manager 30 (step S12). Based on the personal authentication information, the account manager 30 confirms that the user 20 is the user (normal user) who has the account information (step S22).

Once the identity verification of the user 20 is finished, the account manager 30 deletes the password of the user 20 from the account information 13 (step S23). The account manager 30 generates a temporary password of the user 20 and sets the temporary password to the account information 13 (step S24). The account manager 30 then issues (transmits) the temporary password to the user 20 (step S25).

The user 20 receives the temporary password issued by the account manager 30 (step S13) and uses the temporary password to perform a login input for accessing the access target data 11 managed by the password management system 10 (step S114).

The login account mechanism 12 checks the temporary password inputted by the user 20 and permits the login of the user 20. The login account mechanism 12 then presents the user 20 with a screen for setting a fresh password (new password) of the user 20.

The user 20 performs an operation of setting the new password through the screen (step S115). The new password reset by the user 20 is transmitted to the password management system 10, and the login account mechanism 12 sets the new password to the account information 13.

The conventional login authentication method shown in Figure 2 has the following problems of (1) to (4).
(1) The temporary password transmitted by the account manager to the user may be leaked. The leakage may occur during a period of transmission of the temporary password from the account manager 30 to the user 20 between the process of step S25 and the process of step S13 of Figure 2.
(2) Since the identity verification process of the user is not perfect, a third party can impersonate the user to maliciously reset the password. For example, if the third party knows personal information of the user, the third party can impersonate the user in the process between steps S12 and S22 of Figure 2.
(3) If functions of the account manager are not automated, a system manager or the like needs to act for the account manager. Therefore, there is a problem of high labor costs, and much time is required to reset the password.
(4) Much time is required for a process of verifying the identity of the user.

An example of a known technique related to the user authentication when the user forgets the login password includes a technique for carrying out the user authentication using hardware information of the user and an email address of the user. There is also a known technique in which an emergency password can be inputted to delete the manager ID when the manager forgets the password to allow registering again the manager ID and the password corresponding to the manager ID. There is also a known technique for inputting an emergency password when the password is forgotten to allow resetting the password.
There is also a known technique in which a value specific to a network terminal is used as the password for logging in to the application server, and the network terminal and an authentication auxiliary server mutually communicate to automatically generate the password.

In the known techniques disclosed in Patent Documents 1 and 4, there is a risk of unauthorized access by a malicious third party by use of a terminal that can access the computer system, or a risk of a wrong operation of data by a user who does not have access authority. Furthermore, the known techniques are used based on network connections, and there are restrictions that the techniques cannot be applied to a stand-alone terminal device.

In the known techniques of Patent Documents 1 and 4, if a terminal device whose authentication information is registered in the server breaks down, the access target data that was accessible by the terminal device cannot be accessed. A user without access authority can use a terminal device whose authentication information is registered in the server to maliciously access the data, and there is a problem in terms of security.
Patent Document 1: National Publication of International Patent Application No. 2005-527909
Patent Document 2: Japanese Patent Laid-Open No. 2002-24181
Patent Document 3: Japanese Patent Laid-Open No. 2005-31884
Patent Document 4: Japanese Patent Laid-Open No. 11-187016

### Disclosure of the Invention

An object of the present invention is to allow an easy operation of account information managed in an information processing system including an access authentication mechanism while ensuring high security.
The present invention is based on an access authentication method of an information processing system that performs login authentication by input of account information.

The present invention provides an access authentication method including: a step of registering, in the information processing system, registered terminal information for identifying a terminal device that can operate the account information; a step of referencing the registered terminal information if there is an operation request of the account information from a terminal device to the information processing system and determining whether the registered terminal information of the terminal device indicates the terminal device registered in the information processing system; and a step of permitting the terminal device to operate the account information managed by the information processing system if it is determined that the terminal device that has issued the operation request of the account information is the terminal device registered in the information processing system.

According to the present invention, account information managed in an information processing system including an access authentication mechanism can be easily operated while ensuring high security.

### Brief Description of the Drawings

Figure 1 is a schematic diagram showing an example of configuration of a computer system of a client/server model including an access authentication mechanism;
Figure 2 is a flow chart showing a conventional processing procedure of resetting a password when a user forgets the password;
Figure 3 is a schematic diagram showing a basic configuration of a computer system as an embodiment of the present invention;
Figure 4 is a block diagram showing a processing configuration of the computer system of the present embodiment when a user registers an account information operation terminal device in a password management system;
Figure 5 is a conceptual diagram showing an example of configuration of account information, device-specific information, and registered terminal information and a relationship between the pieces of information;
Figure 6 is a diagram showing an example of a data structure of a registered terminal information management table that is arranged in the password management system and that manages the registered terminal information;
Figure 7 is a flow chart showing details of a processing procedure of registering the account information operation terminal device in the password management system according to the present embodiment;
Figure 8 is a block diagram showing a processing configuration of the computer system of the present embodiment when the user uses the account information operation terminal device to operate account information of the user;
Figure 9 is a flow chart showing details of a processing procedure of an operation of the account information according to the present embodiment;
Figure 10 is a flow chart showing an operation procedure of resetting the password by the user when the user forgets the password according to the present embodiment;
Figure 11 is a conceptual diagram showing a registration method of an account information operation terminal device according to a first example of the present embodiment;
Figure 12 is a diagram showing a configuration of a computer system of the first example when the account information operation terminal device is registered in a password management system;
Figure 13 is a diagram showing an example of an account operation terminal registration screen;
Figure 14 is a diagram showing a format on a network of a device-specific information notification frame transmitted by SSL communication;
Figure 15 is a conceptual diagram showing an operation method of the account information in the system of the first example of the present embodiment;
Figure 16 is a diagram showing a configuration of the computer system when the account information operation terminal device is used to operate the account information (password in this example) of a data operation terminal device registered in the password management system;
Figure 17 is a diagram showing an initial display of a password operation screen;
Figure 18 is a diagram showing a result display of the password operation screen;
Figure 19 is a diagram showing a format of an account information operation request frame transmitted by SSL communication from a Web browser of the account information operation terminal device to a Web server of the password management system;
Figure 20 is a diagram showing a hardware configuration of the computer system of Figures 12 and 16;
Figure 21 is a conceptual diagram showing a schematic configuration of a second example;
Figure 22 is a diagram showing a system configuration during registration of a BIOS password operation terminal device according to the second example;
Figure 23 is a diagram showing a system configuration when a BIOS password of a BIOS password setting terminal device is reset; and
Figure 24 is a flow chart showing a procedure of a process by the BIOS password operation terminal device resetting the BIOS password of the BIOS password setting terminal device.

### Best Mode for Carrying Out the Invention

Hereinafter, an embodiment of the present invention will be described with reference to the drawings.

### [Summary of Entire System]

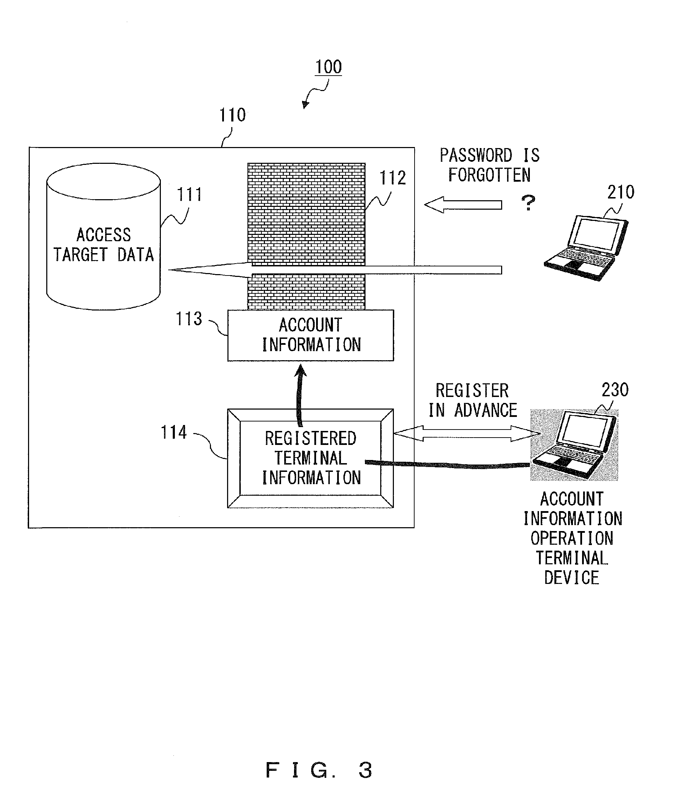

Figure 3 is a schematic diagram showing a basic configuration of a computer system as an embodiment of the present invention.

A computer system 100 shown in Figure 3 includes a password management system 110, a first terminal device 210 that can access the password management system 110, and a second terminal device 230 that can access account information 113 managed by the password management system 110. The password management system 110 and the first and second terminal devices 210 and 230 are connected via a network (not shown).

The password management system 110 includes access target data 111, a login account mechanism 112, and registered terminal information 114. The access target data 111 is stored in an external storage device included in a server (not shown) arranged in the password management system 110. The login account mechanism 112 includes the account information 113 used for access authentication. When the first terminal device 210 (hereinafter, described as "data operation terminal device 210") accesses the access target data 111, the login account mechanism 112 references the account information 113 to perform access authentication of the data operation terminal device 210. The account information 113 includes, as described later, a login user ID and a password.

The second terminal device 230 (hereinafter, described as "account information operation terminal device 230") that can access the account information 113 is determined in a fixed manner. The account information operation terminal device 230 is registered in advance in the computer system 100. The account information operation terminal device 230 is registered in the password management system 110 by registering the registered terminal information 114 in the login account mechanism 112 in advance.

The registered terminal information 114 is information specific to terminal devices that can identify individual terminal devices. Examples of the registered terminal information 114 include a serial number of the terminal device, a UUID (Universally Unique Identifier), a MAC address (Media Access Control Address), and contractor information written in a UIM card (User Identity Module Card) used in a cell phone.

As described, the account information 113 includes the login user ID and the password. Therefore, when the user of the data operation terminal device 210 forgets the password, the user cannot access the access target data 111. Consequently, the user of the data operation terminal device 210 accesses the account information 113 from the account information operation terminal device 230 to reset the password of the user or to delete the password of the user. Subsequently, the user can access the password management system 110 from the data operation terminal device 210 again to access the access target data 111. More specifically, when the user changes the password of the user, the user can use the changed password to log in to the password management system 110. Therefore, the user can access the access target data 111 managed by the password management system 110. When the user deletes the password of the user, the user sets a new password through an account information resetting screen provided by the login account mechanism 112 of the password management system 110. The user uses the new password to log in to the password management system 110 from the data operation terminal device 210 to access the access target data 111.

In this way, according to the present embodiment, even if the user forgets the password of the account information 113 necessary to access the access target data 111, the user can use the account information operation terminal device 230 that is a terminal device different from the data operation terminal device 210 to change or delete the password to access the access target data 111. The user can also operate the account information 113 without performing an operation to access the access target data 111.

### [Configuration When Account Information Operation Terminal Device Is Registered in System]

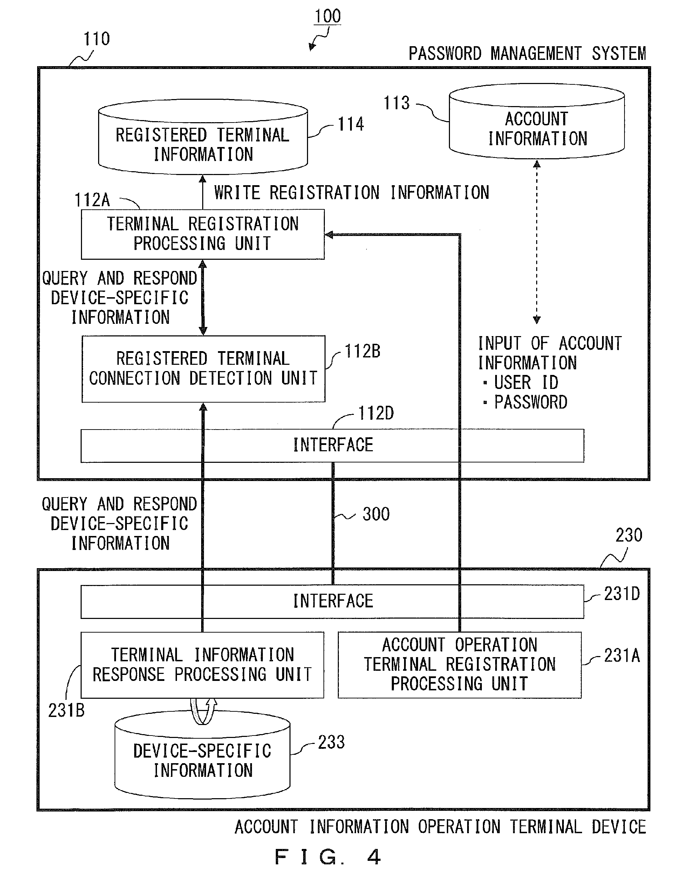

Figure 4 is a block diagram showing a processing configuration of the computer system 100 of the present embodiment when the account information operation terminal device 230 is registered in the system.

The computer system 100 includes the password management system 110, the account information operation terminal device 230, and a communication channel 300 that connects communication between the password management system 110 and the account information operation terminal device 230.

### {Configuration of Password Management System 110}

For the registration of the account information operation terminal device 230 in the system, the password management system 110 includes a terminal registration processing unit 112A, a registered terminal connection detection unit 112B, an interface 112D, the account information 113, and the registered terminal information 114.

The terminal registration processing unit 112A has a function of setting the registered terminal information 114 in a storage device (not shown). The storage device is, for example, a nonvolatile external storage device. The registered terminal information 114 includes information (device-specific information) for individually identifying the account information operation terminal devices 230 connected to the password management system 110 and information indicating the correspondence with the account information. When an input of the login user ID ("login user name" in the present embodiment) and the password transmitted from the account operation terminal registration processing unit 231A arranged inside the account information operation terminal device 230 is received, the terminal registration processing unit 112A creates the registered terminal information 114 including a set of the login user name and the device-specific information received from the registered terminal connection detection unit 112B and records the registered terminal information 114 in the storage device.

The registered terminal connection detection unit 112B is activated when the account information operation terminal device 230 is connected to the password management system 110, communicates with a terminal information response processing unit 231B described later, arranged in the account information operation terminal device 230, and receives the device-specific information from the terminal information response processing unit 231B. When a query for the device-specific information is received from the terminal registration processing unit 112A, the registered terminal connection detection unit 112B returns the device-specific information received from the terminal information response processing unit 231B to the terminal registration processing unit 112A.

The interface 112D transmits and receives commands and information to and from an interface 231D (described later) arranged in the account information operation terminal device 230 via the communication channel 300.

The account information 113 is information including a set of the login user name and the password. The registered terminal information 114 is information including a set of the login user name, which is part of the account information 113, and device-specific information 233.

### {Configuration of Account Information Operation Terminal Device 230}

For the registration of the account information operation terminal device 230 in the system, the account information operation terminal device 230 includes an account operation terminal registration processing unit 231A, the terminal information response processing unit 231B, the interface 231D, and the device-specific information 233.

The account operation terminal registration processing unit 231A designates a user ID corresponding to the account information 113 to be operated and issues, to the terminal registration processing unit 112A of the password management system 110, a request for registering, as the account information operation terminal device 230, the account operation terminal registration processing unit 231A operated by the system. The registration request of the account information operation terminal device 230 is transmitted to the password management system 110 via the interface 231D and the communication channel 300. The registration request is then transmitted from the interface 231D to the terminal registration processing unit 112A.

The terminal information response processing unit 231B returns the device-specific information 233 to the registered terminal connection detection unit 112B in response to the "request for the device-specific information" from the registered terminal connection detection unit 112B of the password management system 110. The device-specific information 233 is transmitted to the terminal registration processing unit 112A via the interface 231D, the communication channel 300, and the interface 112D.

The device-specific information 233 is information for specifying the terminal device (the data operation terminal device 210 or the account information operation terminal device 230). The device-specific information 233 is information specific to individual terminal devices. The device-specific information 233 includes, for example, a serial number of a device, a UUID, a MAC address, and contractor information recorded in a UIM card.

### [Configuration of Account Information, Device-Specific Information, and Registered Terminal Information]

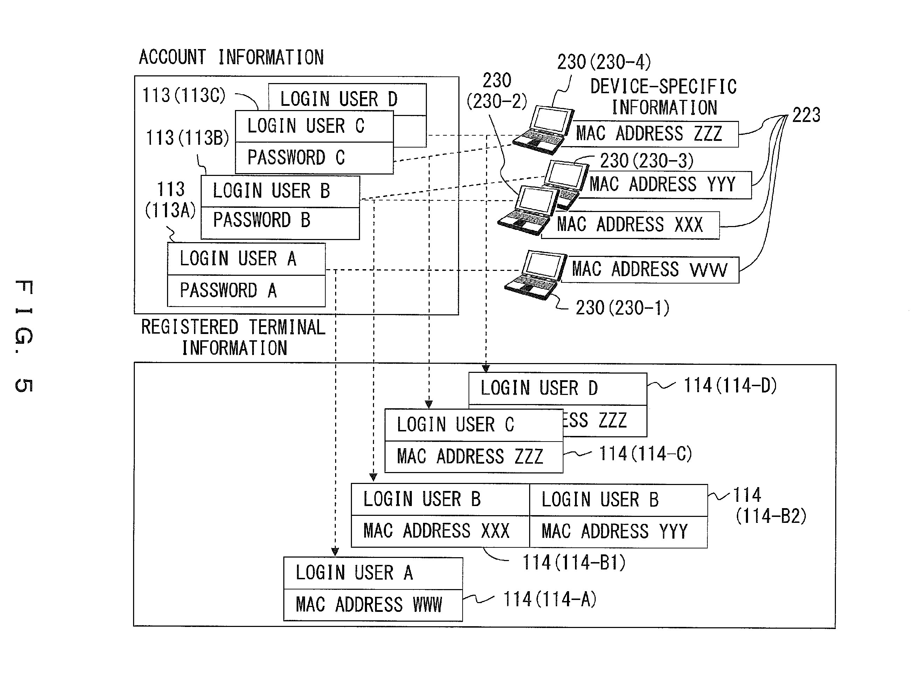

Figure 5 is a diagram showing an example of configuration of the account information 113, the device-specific information 233, and the registered terminal information 114 and a relationship between the pieces of information.

Each of the four account information operation terminal devices 230 (230-1, 230-2, 230-3, and 230-4) shown in Figure 5 includes the device-specific information 233 specific to each device. In this example, the device-specific information 233 is a MAC address. The MAC addresses of the account information operation terminal devices 230 are as follows.

MAC address of account information operation terminal device 230-1 = MAC address WWW
MAC address of account information operation terminal device 230-2 = MAC address XXX
MAC address of account information operation terminal device 230-3 = MAC address YYY
MAC address of account information operation terminal device 230-4 = MAC address ZZZ
One or two pieces of account information 113 connected by broken lines in Figure 5 are set to each of the account information operation terminal devices 230-i (i = 1 to 4). More specifically, the account information 113 of the account information operation terminal device 230-1 includes (login user A, password A). The account information 113 of the account information operation terminal device 230-2 includes (login user B, password B). The account information 113 of the account information operation terminal device 230-3 includes (login user B, password B). Two pieces of account information 113 (login user C, password C) and (login user D, password D) are set to the account information operation terminal device 230-4. Therefore, in the example, the login user B can use two account information operation terminal devices 230 (account information operation terminal devices 230-2 and 230-3).

There are the following three methods of (1) to (3) for setting the registered terminal information 114 of the present embodiment.
(1) One login user registers one account information operation terminal device 230.
(2) A plurality of account information operation terminal devices 230 are registered for one login user.
(3) Different login users register the same one account information operation terminal device 230.

An example of setting the registered terminal information 114 shown in Figure 5 will be described.
The login user A uses the method of (1) to register the account information operation terminal device 230-1 in the password management system 110. In this case, the registered terminal information 114A (login user A, MAC address WWW) is registered in the password management system 110.

The login user B uses the method of (2) to register two account information operation terminal devices 230 (account information operation terminal devices 230-2 and 230-3) in the password management system 110. In this case, registered terminal information 114B1 (login user B, MAC address XXX) and registered terminal information 114B2 (login user B, MAC address YYY) are registered in the password management system 110.

The login user C and the login user D use the method of (3) to register the account information operation terminal device 230-4 in the password management system 110. In this case, registered terminal information 114-C (login user C, MAC address ZZZ) and registered terminal information 114-D (login user D, MAC address ZZZ) are registered in the password management system 110. In this case, the login user C and the login user D share the account information operation terminal device 230-4.

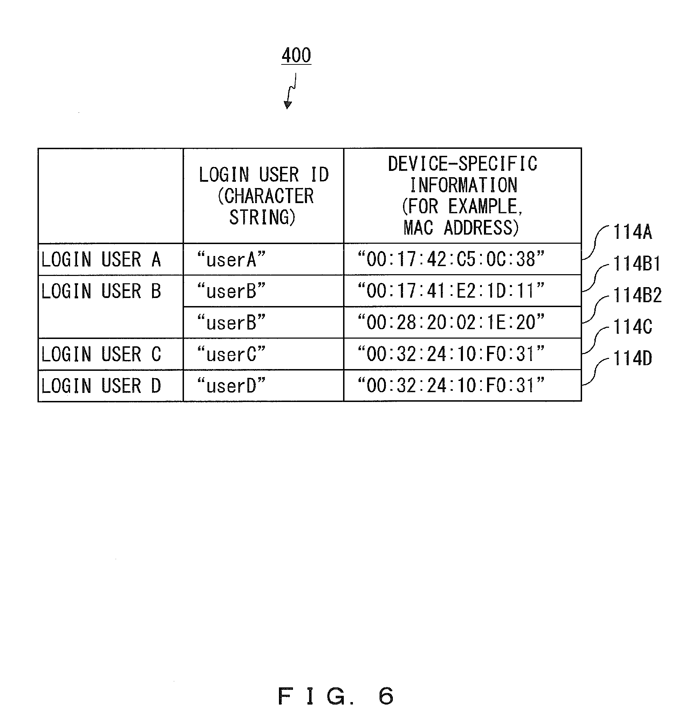

Figure 6 is a diagram showing an example of a data structure of a registered terminal information management table 400 that is arranged inside the password management system 110 and that manages the registered terminal information 114.
The registered terminal information management table 400 shown in Figure 6 manages five pieces of registered terminal information 114 shown in Figure 5. Each entry of the registered terminal information management table 400 stores a set of a login user ID (character string) and device-specific information (MAC address in this example) corresponding to the login user ID. The login user ID is information corresponding to the login user name. In the registered terminal information management table 400, the login user A is expressed by a user ID including a character string "userA". Similarly, the login users B, C, and D are expressed by character strings "userB", "userC", and "userD", respectively. The character string within "" denotes the user ID.

The MAC address is, for example, address information of six bytes defined by IEEE 802 (Institute of Electrical and Electronics Engineers 802). In Figure 6, each byte of the six bytes is separated by ":" and is expressed by a two-digit hexadecimal sign. More specifically, each byte is divided into upper four bits and lower four bits, and each value of four bits is expressed by a hexadecimal sign. In the IEEE 802, the upper four bytes denote information for identifying the manufacturer allocated by the IEEE, and the lower four bytes denote information independently managed by the manufacturer.

The registered terminal information 114A is registered in the first line of the registered terminal information management table 400. The registered terminal information 114BI and the registered terminal information 114B2 are registered in the second and the third lines of the registered terminal information management table 400. The registered terminal information 114C is registered in the fourth line, and the registered terminal information 114D is registered in the fifth line of the registered terminal information management table 400. The terminal registration processing unit 112A uses the login user ID as a key to search the registered terminal information management table 400 to acquire the device-specific information 233 of the account information operation terminal device 230 corresponding to the login user ID.

### [Registration Processing Procedure of Account Information Operation Terminal Device]

To register the account information operation terminal device 230 in the system, the user first connects the account information operation terminal device 230 to the password management system 110 and then inputs the account information 113 inputted to the account information operation terminal device 230. The account information 113 is transmitted from the account information operation terminal device 230 to the password management system 110, and the password management system 110 receives the account information 113. When the user connects the account information operation terminal device 230 to the password management system 110, the password management system 110 automatically acquires the device-specific information 233 of the account information operation terminal device 230 from the account information operation terminal device 230 connected to the system. When the process is finished, the password management system 110 creates the registered terminal information 114 based on the inputted account information 113 and the acquired device-specific information 233. The password management system 110 stores the created registered terminal information 114 in the storage device of the system. As a result of the process, the account information operation terminal device 230 connected to the password management system 110 by the user is registered in the password management system 110. Therefore, the terminal device (account information operation terminal device 230) for the user to operate the account information 113 is registered as the registered terminal information 114 in the password management system 110.

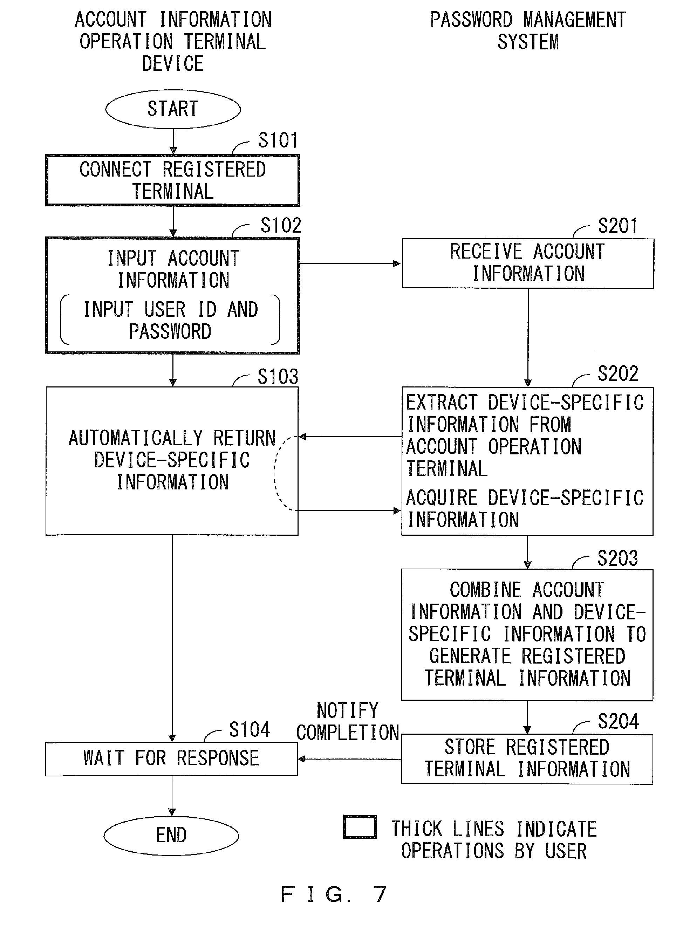

Figure 7 is a flow chart showing details of the processing procedure of registering the account information operation terminal device 230 in the password management system 110 according to the present embodiment. In Figure 7, the left side shows a flow chart of the processing procedure of the account information operation terminal device 230, and the right side shows a flow chart of the processing procedure of the password management system 110. In Figure 7, steps surrounded by thick lines denote operations by the user.

The details of the procedure of the process of registering the account information operation terminal device 230 in the password management system 110 will be described with reference to the flow chart of Figure 7.
The user first connects, to the system 100, the account information operation terminal device 230 to be registered in the system (step S101). As a result, the account information operation terminal device 230 is connected to the password management system 110 via the communication channel 300. The registered terminal connection detection unit 112B of the password management system 110 detects and stores the connection of the account information operation terminal device 230 to the system.

The user then inputs the account information from the account information operation terminal device 230 (step S102). The account information inputted here needs to be the account information 113 managed by the password management system 110 . More specifically, the present embodiment is based on the assumption that the user who registers the account information 113 in the password management system 110 registers the account information operation terminal device 230 in the system.
The user inputs the account information via, for example, a user interface screen displayed on a display unit of the account information operation terminal device 230. The inputted account information 113 is transmitted from the account operation terminal registration processing unit 231A to the terminal registration processing unit 112A of the password management system 110 via the communication channel 300.

The terminal registration processing unit 112A receives the account information 113 inputted by the user from the account information operation terminal device 230 (step S201). The terminal registration processing unit 112A queries the account information operation terminal device 230 for the device-specific information 233 of the account information operation terminal device 230 (step S202). The account information operation terminal device 230 returns the device-specific information 233 of the account information operation terminal device 230 to the terminal information response processing unit 231B (step S103) and enters a response waiting state (step S104).

The processes of steps S202 and S103 executed between the password management system 110 and the account information operation terminal device 230 will be described in detail.
The terminal registration processing unit 112A queries the registered terminal connection detection unit 112B for the device-specific information 233 of the account information operation terminal device 230. In response, the registered terminal connection detection unit 112B queries the terminal information response processing unit 231B of the account information operation terminal device 230 for the device-specific information 233. In response, the terminal information response processing unit 231B returns the device-specific information 233 of the account information operation terminal device 230 to the registered terminal connection detection unit 112B of the password management system 110. The registered terminal connection detection unit 112B transmits the device-specific information 233 received from the terminal information response processing unit 231B to the terminal registration processing unit 112A.

In this way, when the device-specific information 233 of the account information operation terminal device 230 is queried from the password management system 110, the account information operation terminal device 230 automatically responds to the query and transmits the device-specific information 233 of the account information operation terminal device 230 to the password management system 110.

When the device-specific information 233 of the account information operation terminal device 230 is acquired in step S202, the password management system 110 combines the device-specific information 233 with the account information 113 received in step S201 to generate the registered terminal connection detection unit 112B (step S203). The terminal registration processing unit 112A in the password management system 110 writes the generated account information 113 inside the storage device. When writing and recording of the registered terminal information 114 to the storage device are completed, the terminal registration processing unit 112A notifies the registered terminal connection detection unit 112B of the completion of the registration of the registered terminal information 114. When the registration completion notification is received, the registered terminal connection detection unit 112B transmits a "registration completion notification of registered terminal information" (hereinafter, described as "completion notification") to the account information operation terminal device 230 via the interface 112D (step S204).

When the terminal information response processing unit 231B of the account information operation terminal device 230 receives the completion notification transmitted by the registered terminal connection detection unit 112B via the interface 112D (step S104), the process of the flow chart is finished.

### [System Configuration When Account Information Is Operated]

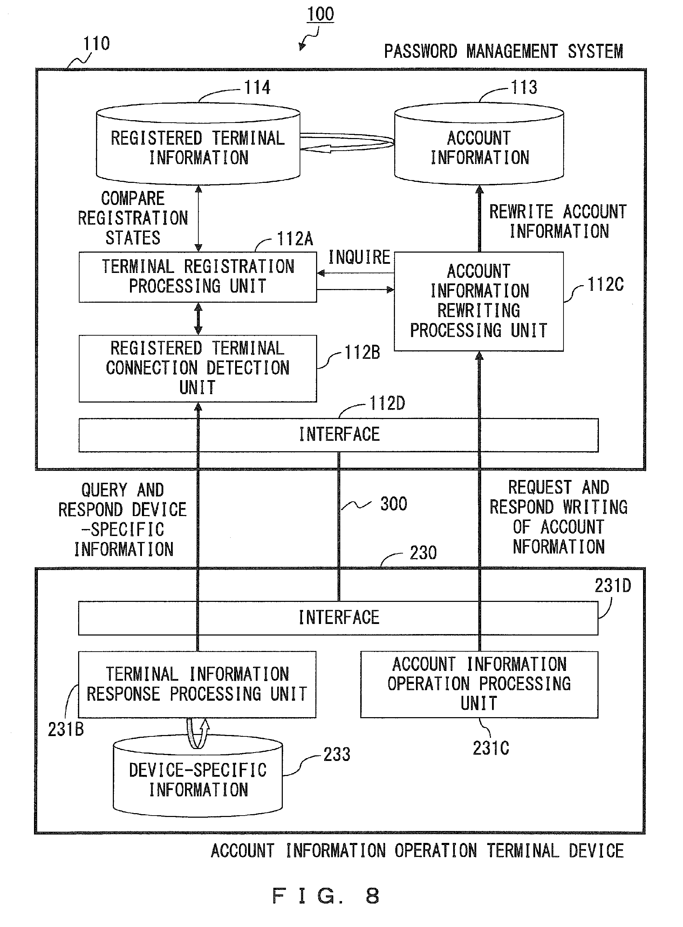

Figure 8 is a block diagram showing a processing configuration of the computer system 100 of the present embodiment when the user uses the account information operation terminal device 230 to operate the account information 113 of the user. In Figure 8, the same constituent elements as the constituent elements shown in Figure 4 are provided with the same reference numerals, and the description of the functions of the constituent elements will not be repeated.

### [Configuration of Password Management System 110]

The password management system 110 includes the terminal registration processing unit 112A, the registered terminal connection detection unit 112B, an account information rewriting processing unit 112C, the interface 112D, the account information 113, and the registered terminal information 114.

The account information rewriting processing unit 112C communicates with an account information operation processing unit 231C (described later) of the account information operation terminal device 230 via the interface 112D. When an account information rewriting request is received from the account information operation processing unit 231C, the account information rewriting processing unit 112C queries the terminal registration processing unit 112A whether the terminal device that has transmitted the account information rewriting request is the account information operation terminal device 230 registered in the system. When a result of query indicating that the terminal device is the "account information operation terminal device 230 registered in the system" is received from the terminal registration processing unit 112A, the account information operation processing unit 231C executes a rewriting process of the existing account information 113 in accordance with the account information rewriting request received from the account information operation processing unit 231C.

### [Configuration of Account Information Operation Terminal Device 230]

The account information operation terminal device 230 includes the terminal information response processing unit 231B, the account information operation processing unit 231C, the interface 112D, and the device-specific information 233.

The account information operation processing unit 231C communicates with the account information rewriting processing unit 112C of the password management system 110 via the interface 112D to transmit a request (the account information rewriting request) for rewriting the account information 113 managed in the password management system 110 to the account information rewriting processing unit 112C in the password management system 110. The account information rewriting processing unit 112C displays, for example, a screen for inputting the account information (user ID) and new account information 113 on the display unit included in the account information operation terminal device 230. The account information rewriting request provided with the account information (user ID) and the new account information 113 inputted by the user on the input screen is issued to the account information rewriting processing unit 112C of the password management system 110.

### [Processing Procedure for Operating Account Information 113]

The operation of the account information 113 denotes a procedure of deleting/resetting the already set password of the user. In the present embodiment, the user can use the account information operation terminal device 230 registered in the password management system 110 by the user to directly operate the account information 113.

To operate the account information 113, the user connects the account information operation terminal device 230 registered in the password management system 110 by the user to the password management system 110 to execute a rewriting process of the account information 113. When the rewriting operation request of the account information 113 is received from the account information operation terminal device 230, the password management system 110 determines whether to permit the rewriting operation. The password management system 110 automatically determines whether to permit the rewriting operation of the account information 113.

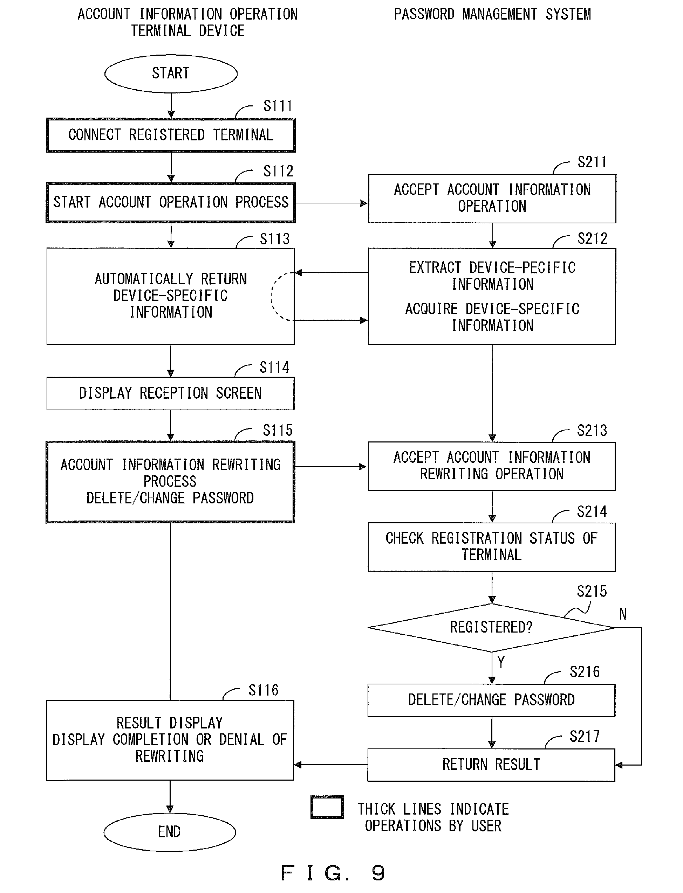

Figure 9 is a flow chart showing details of the processing procedure of the operation of the account information 113 according to the present embodiment. In Figure 9, the left side is a flow chart showing a processing procedure of the account information operation terminal device 230, and the right side is a flow chart showing a processing procedure of the password management system 110. In Figure 9, steps surrounded by frames of thick lines denote operations by the user.

The details of the processing procedure for the user to operate the account information 113 will be described with reference to Figure 9.
The user first connects the account information operation terminal device 230 registered by the user to the password management system 110 (step S111). As a result, the registered terminal connection detection unit 112B is activated in the password management system 110.

The user then starts an account operation process in the account information operation terminal device 230 and inputs an account information rewriting request to the account information operation terminal device 230. The account information operation processing unit 231C transmits the account information rewriting request inputted by the user to the password management system 110 (step S112).

The account information rewriting processing unit 112C of the password management system 110 receives the account information rewriting request transmitted by the account information operation processing unit 231C (step S211). The account information rewriting processing unit 112C transmits the "user ID" added to the account information rewriting request to the terminal registration processing unit 112A and inquires the terminal registration processing unit 112A whether the account information operation terminal device 230 including the user ID is registered in the password management system 110 (step S211).

The terminal registration processing unit 112A requests the registered terminal connection detection unit 112B to transmit the device-specific information 233 of the account information operation terminal device 230 connected to the password management system 110. The registered terminal connection detection unit 112B queries the terminal information response processing unit 231B of the account information operation terminal device 230 for the device-specific information 233 of the account information operation terminal device 230 connected to the password management system 110. The terminal information response processing unit 231B extracts the device-specific information 233 of the account information operation terminal device 230 and transmits the device-specific information 233 to the registered terminal connection detection unit 112B of the password management system 110. The registered terminal connection detection unit 112B receives the device-specific information 233 transmitted by the terminal information response processing unit 231B (steps S113 and S212).

When the process of step S113 is finished, the account information operation terminal device 230 displays, on the display unit, a screen (reception screen) for the user to receive an input of the "account information rewriting request" (step S114). The account information rewriting request is a request for the user to ask the password management system 110 to delete/change the password.

The user executes an account information rewriting process through the reception screen (step S115). The user inputs necessary data to "deletion of password" or "change of password" in the account information rewriting process. In step S115, the account information rewriting processing unit 112C transmits a rewriting request of the account information to the account information rewriting processing unit 112C of the password management system 110. The rewriting request of the account information is for requesting the password management system 110 to "delete the password of the user" or "change the password of the user". In the request for deleting the password of the user, the "user ID of the user", and a "command for instructing the deletion of the password" are transmitted to the account information rewriting processing unit 112C. Upon the change of the password of the user, the "user ID of the user" and a "command for instructing the change of the password" are transmitted to the account information rewriting processing unit 112C.

The account information rewriting processing unit 112C of the password management system 110 receives the rewriting request of the account information transmitted by the account information rewriting processing unit 112C of the account information operation terminal device 230 (step S213). The account information rewriting processing unit 112C checks the registration status of the account information operation terminal device 230 connected to the password management system 110 (step S214) and determines whether the account information operation terminal device 230 is registered in the password management system 110 (step S215).

The processes of steps S214 and S215 are executed by the account information rewriting processing unit 112C transmitting the user ID to the terminal registration processing unit 112A and inquiring whether the account information operation terminal device 230 connected to the password management system 110 is registered in the password management system 110. The terminal registration processing unit 112A that has received the inquiry from the account information rewriting processing unit 112C acquires the device-specific information 233 of the account information rewriting processing unit 112C connected to the password management system 110 from the registered terminal connection detection unit 112B. The terminal registration processing unit 112A then checks whether the registered terminal information 114 including the device-specific information 233 and the user ID received from the account information rewriting processing unit 112C is registered. If the registered terminal information 114 is registered, the terminal registration processing unit 112A returns a response "registered" to the account information rewriting processing unit 112C. On the other hand, if the registered terminal information 114 is not registered, the terminal registration processing unit 112A returns a response "not registered" to the account information rewriting processing unit 112C. The account information rewriting processing unit 112C performs the determination of step S214 based on the result of response from the terminal registration processing unit 112A.

The account information rewriting processing unit 112C proceeds to step S216 if it is determined that the information is "registered" in step S215 and proceeds to step S217 if it is determined that the information is "not registered".

The account information rewriting processing unit 112C deletes/changes the password of the account information 113 of the user in step S216. The process then proceeds to step S217.

In step S217, the account information rewriting processing unit 112C returns the response for the rewriting request of the account information received in step S213 to the account information operation processing unit 231C of the account information operation terminal device 230. The response is, for example, "rewriting completed" or "denied". If the account information operation terminal device 230 connected by the user to the password management system 110 is registered in the password management system 110, the response is "rewriting completed", and if not registered, the response is "denied".

The account information operation processing unit 231C of the account information operation terminal device 230 displays, on the screen of the display unit, the result of response received from the account information rewriting processing unit 112C of the password management system 110 (step S116). The process of the flow chart ends.

### [Resetting Flow of Password According to the Present Embodiment]

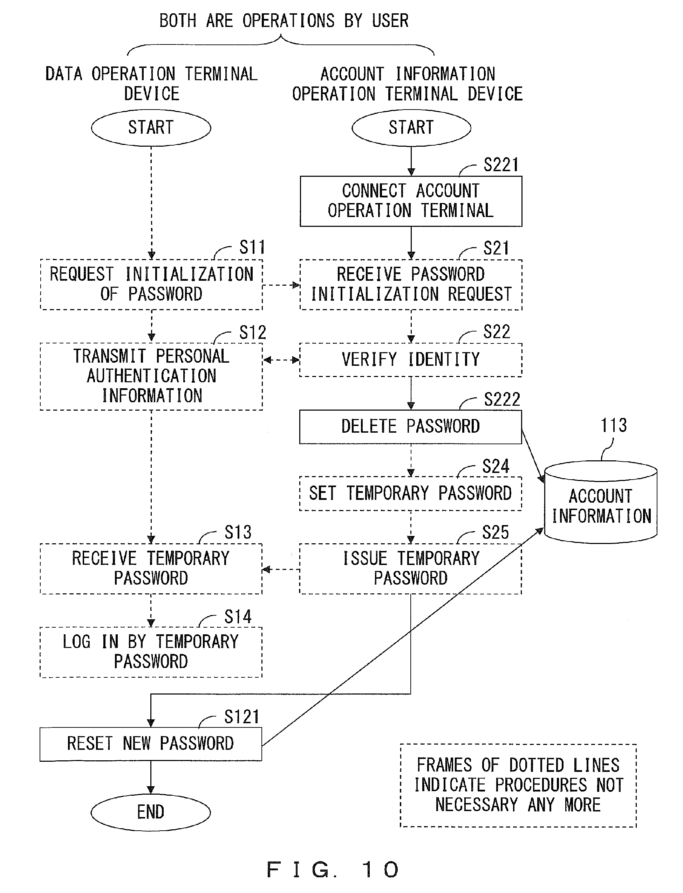

Figure 10 is a flow chart showing an operation procedure of resetting the password by the user when the user forgets the password according to the present embodiment. In Figure 10, the same steps as the steps included in the flow chart of Figure 2 are provided with the same step numbers. Steps surrounded by broken lines are steps not executed in the present embodiment. In Figure 10, the left side is a flow chart showing a process operated by the user in the data operation terminal device 210, and the right side is a flow chart showing a process operated by the user in the account information operation terminal device 230.

The operation flow of the present embodiment for resetting the password when the user forgets the password will be described with reference to Figure 10.
The user first connects the account information operation terminal device 230 to the password management system 110 (step S221). The user then performs an operation of using the account information operation terminal device 230 to delete the password (step S222). As a result of the execution of the operation of step S222, the password of the account information 113 of the user is deleted.

The user then performs an operation of using the data operation terminal device 210 to set a new password (step S121). As a result of the execution of the operation of step S121, the password of the account information 113 of the user is set to the new password. Therefore, the account information 113 of the user is rewritten (updated).

As can be recognized by comparing Figures 2 and 10, the operation of resetting the password by the user when the user forgets the password according to the present embodiment is much more simplified than the conventional operations. Moreover, effort by the account manager is not necessary, and the user can carry out the operation alone.

As described, the user (system user) can directly perform the procedure of deleting/reissuing the password that had been performed by the account manager in the past. Therefore, the following problems of the conventional techniques can be solved.
(1) The setting/issuing procedure of a temporary password is not necessary. Therefore, there is no risk of leakage of the temporary password, and the security is enhanced.
(2) Both the data access (access to the access target data) and the deletion of the password are operations of the user who knows the registration of the account information operation terminal device 230. In other words, only the user who knows the password and has the account information (user who has registered the account information operation terminal device 230 for password deletion) can delete the password based on the operation of the account information operation terminal device 230. Therefore, it is impossible for a malicious third party to impersonate the user to perform an operation of initializing the password of the user.
(3) The account manager is not necessary, and the procedure of deleting/resetting the password is significantly reduced.
(4) The identity of the user is verified by automatically acquiring the device-specific information of the account information operation terminal device from the account information operation terminal device. Therefore, the procedure of verifying the identity of the user is simplified, and the processing time required to verify the identity of the user can be saved (reduced).

The following improvements in the operability and economical effects can also be obtained.
(1) A personal computer that is already commercially available can be used as the terminal device to be registered (account information operation terminal device 230). Therefore, a special apparatus, such as biometric authentication, and a special mechanism as in the conventional techniques are not necessary, and the system can be established inexpensively.
(2) The user can register a plurality of terminal devices (account information operation terminal devices 230) for one account (user ID). Therefore, when an account information operation terminal device 230 is replaced, there is no problem in the operation of deleting/resetting the password if an account information operation terminal device 230 that is not replaced is used. If only one account information operation terminal device 230 can be registered for one account, an operation of registering a new account information operation terminal device 230 is necessary when the account information operation terminal device 230 is replaced. Therefore, there is a temporary period without a terminal device that can delete/reset the password, and the reliability of the system is lost.
(3) Only the user who has registered the terminal device knows the terminal device (account information operation terminal device 230) that can reset the password. Therefore, the security can be easily ensured by isolating, from the password management system 110, the terminal device (account information operation terminal device 230) to be registered.

The present embodiment further has the following advantages.
(1) The operation method of the user does not have to be changed upon implementation in an existing system. Therefore, the account information (user ID and password) of the existing system as it is can be used to access the access target data, and the method of inputting the account information does not have to be changed.
(2) The user can use any terminal device to access the access target data. Therefore, even if the terminal device that has been used breaks down, another terminal device can be used to continue accessing the access target data. Thus, the access to the access target data can be continued by logging in from another terminal device.

### [Examples]

Specific examples of the present embodiment will be described.

### [First Example]

In a first example, the present embodiment is applied to a computer system for accessing a server via a network. In the system for accessing the server via the network, the user logs in to the server to receive a service from the server. The system including the server that receives the login of the user generally registers the account information of the user (login user ID and password) in advance to verify the identity based on the login.

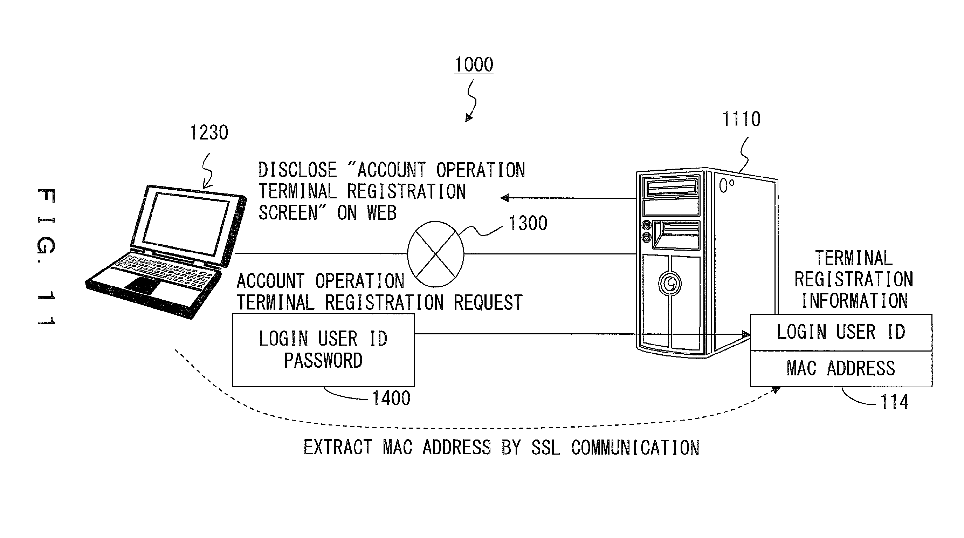

Figure 11 is a conceptual diagram showing a registration method of an account information operation terminal device according to the first example of the present embodiment.
A computer system 1000 shown in Figure 11 includes an account information operation terminal device 1230, a password management system 1110, and a network 1300 connecting the account information operation terminal device 1230 and the password management system 1110. The account information operation terminal device 1230 and the password management system 1110 can mutually communicate via a network 1300.

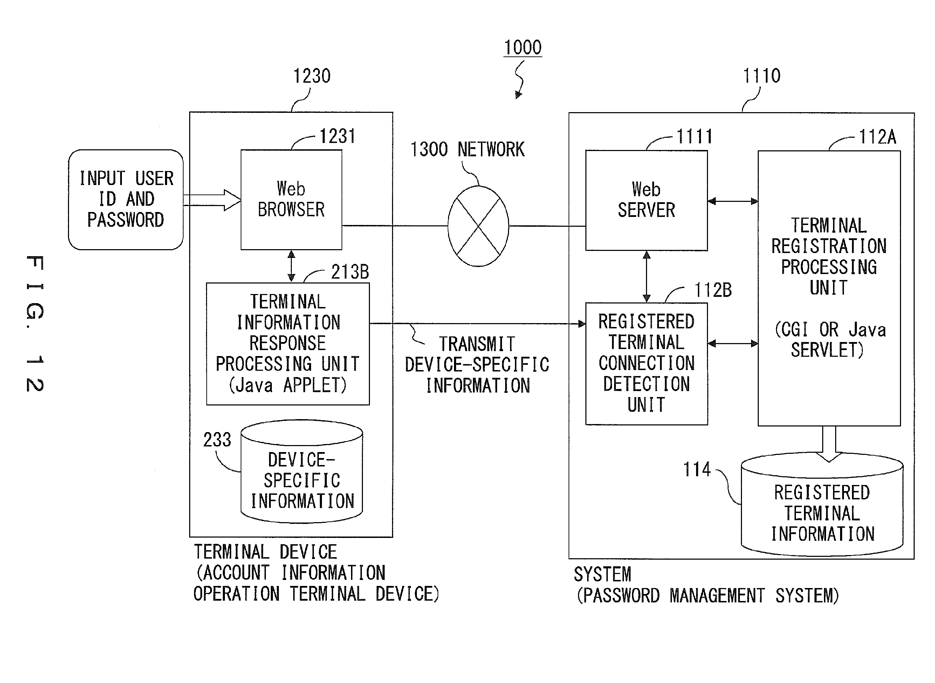

Figure 12 is a diagram showing a configuration of the computer system 1000 when the account information operation terminal device 1230 is registered in the password management system 1110. In Figure 12, constituent elements with the same functions as the constituent elements included in the computer system 100 shown in Figure 4 are provided with the same reference numerals.

The password management system 1110 includes a Web server 1111, the terminal registration processing unit 112A, the registered terminal connection detection unit 112B, and the terminal registration information 114. The Web server 1111 is a server that discloses, on the Web, a screen (account operation terminal registration screen) for the user to register the account information operation terminal device 230. The Web server 1111 communicates with a Web browser 1231 of the account information operation terminal device 230 via the network 1300 based on a protocol, such as HTTP (HyperText Transfer Protocol) and HTTPS (HyperText Transfer Protocol Secure). The network 1300 is, for example, the Internet. The terminal registration processing unit 112A generates the registered terminal information 114 based on the account information of the user notified from the Web server 1111 and the device-specific information 233 of the account information operation terminal device 1230 notified from the registered terminal connection detection unit 112B and stores the registered terminal information 114 in an internal storage device (not shown). The terminal registration processing unit 112A is, for example, CGI (Common Gateway Interface) or Java Servlet. As shown in Figure 11, the terminal registration information 114 includes, for example, a "login user ID", and a "password".

The account information operation terminal device 1230 includes the Web browser 1231, the terminal information response processing unit 231B, and the device-specific information 233. The Web browser 1231 is browsing software equivalent to the account operation terminal registration processing unit 231A of Figure 3. The Web browser 1231 displays the account operation terminal registration screen on a display unit of the account information operation terminal device 1230 and acquires the account information (user ID and password) from the user through the account operation terminal registration screen. The terminal information response processing unit 231B transmits the device-specific information 233 of the account information operation terminal device 1230 to the registered terminal connection detection unit 112B of the password management system 1110 via the network 1300. The terminal information response processing unit 231B is, for example, Java Applet.

### {Registration of Account Information Operation Terminal Device in First Example}

A registration operation method of the account information operation terminal device according to the first example will be described with reference to Figures 11 and 12.
(1) The password management system 1110 prepares the Web server 1111 and discloses, on the Web, an "account operation terminal registration screen" for registering the account information operation terminal device 1230 in the password management system 1110. The account operation terminal registration screen is a screen for the user of the account information operation terminal device 1230 to register the account information operation terminal device 1230 in the password management system 1110 using the Web browser 1231.
(2) The user prepares a second terminal device (account information operation terminal device 1230) for operating the login password, in addition to the first terminal device that receives a service from the Web server 1111.
(3) The user activates the Web browser 1231 from the account information operation terminal device 1230 and accesses the account operation terminal registration screen disclosed by the password management system 1110 from the Web browser 1231. The user performs an operation of registering the account information operation terminal device 1230 in the password management system 1110 through the account operation terminal registration screen displayed on a display unit 1230d of the account information operation terminal device 1230. In the operation, the user inputs, to the account operation terminal registration screen, the account information ("login user ID" and "password") to be registered. The Web browser 1231 transmits the account information inputted by the user to the Web server 1111 of the password management system 1110 via the network 1300. The Web server 1111 notifies the terminal registration processing unit 112A of the account information received from the Web browser 1231 (see an account operation terminal registration request 1400 of Figure 11).
(4) The Web browser 1231 of the account information operation terminal device 1230 automatically downloads the terminal information response processing unit 231B from the Web server 1111 of the password management system 1110 to the account information operation terminal device 1230. The terminal information response processing unit 231B of the account information operation terminal device 1230 and the registered terminal connection detection unit 112B of the password management system 1110 transmit the device-specific information 233 to the registered terminal connection detection unit 112B of the password management system 1110 via the network 1300. The transmission is performed by, for example, SSL (Secure Sockets Layer) communication between the Web browser 1231 and the Web server 1111. The device-specific information 233 is, for example, a MAC address of the account information operation terminal device 1230. The device-specific information 233 is encoded by SSL communication and is transmitted from the terminal information response processing unit 231B of the account information operation terminal device 1230 to the registered terminal connection detection unit 112B of the password management system 1110 via the network 1300. The registered terminal connection detection unit 112B notifies the terminal registration processing unit 112A of the device-specific information 233 received from the Web browser 1231.
(5) The terminal registration processing unit 112A of the password management system 1110 generates the registered terminal information 114 based on the device-specific information 233 notified from the registered terminal connection detection unit 112B and the login user ID notified from the server 1111 in (3) and stores the registered terminal information 114 in the internal storage device (not shown).

### {Account Operation Terminal Registration Screen}

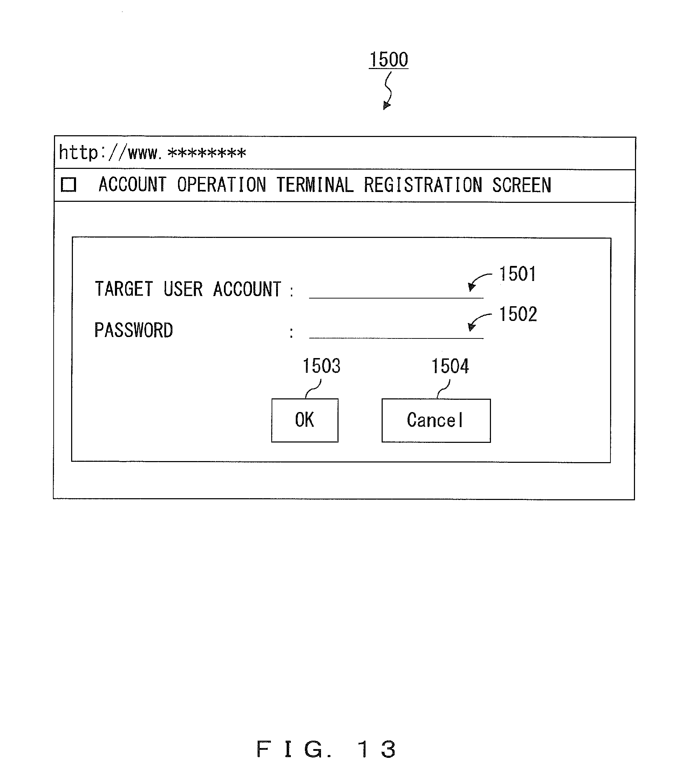

Figure 13 is a diagram showing an example of the account operation terminal registration screen.
An account operation terminal registration screen 1500 shown in Figure 13 includes a target user account input field 1501, a password input field 1502, an OK button 1503, and a Cancel button 1504. The target user account input field 1501 is a field for the user of the account information operation terminal device 1230 to input the login user ID to be registered. The password input field 1502 is a field for the user of the account information operation terminal device 1230 to input the password to be registered. To register the account information operation terminal device 1230 in the password management system 1110, the user of the account information operation terminal device 1230 uses the Web browser 1231 to access the account operation terminal registration screen 1500 to input the login user ID and the password to be registered in the target user account input field 1501 and the password input field 1502 of the account operation terminal registration screen 1500, respectively, and clicks the OK button 1503 if the input is finished. As a result, the "login user ID" and the "password" inputted to the account operation terminal registration screen 1500 are transmitted from the Web browser 1231 to the Web server 1111 of the password management system 1110 via the 1300. The Web server 1111 notifies the terminal registration processing unit 112A of the login user ID and the password received from the Web browser 1231. The Cancel button 1504 is a button used to cancel the login user ID and the password inputted to the target user account input field 1501 and the password input field 1502, respectively.

As described in (4), the device-specific information 233 is transmitted from the terminal information response processing unit 231B of the account information operation terminal device 1230 to the registered terminal connection detection unit 112B of the password management system 1110 by SSL communication via the network 1300.

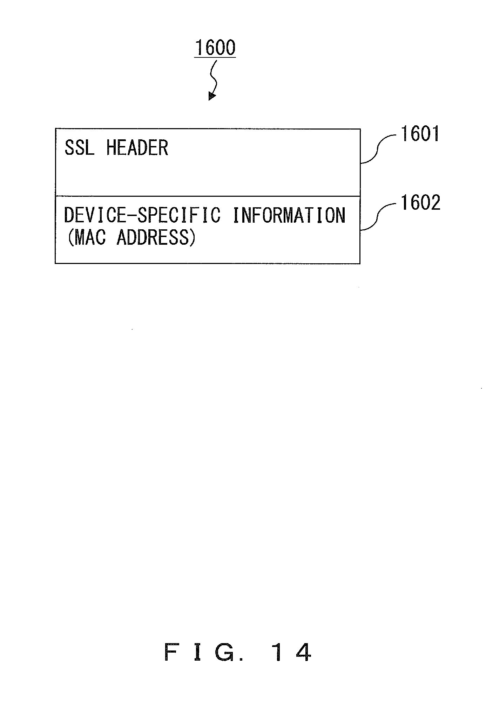

Figure 14 is a diagram showing a format of a device-specific information notification frame transmitted by SSL communication.
A device-specific information notification frame 1600 shown in Figure 14 includes an SSL header 1601 and device-specific information (MAC address in this example) 1602. The SSL header 1611 is a header defined by a protocol of the SSL communication. The device-specific information 1602 denotes the encoded data operation terminal device 210 of the device-specific information 233 of the account information operation terminal device 1230. The device-specific information 1602 is obtained by, for example, encoding with a common key generated by the Web browser 1231.

In this way, the device-specific information 233 of the account information operation terminal device 1230 is encoded by SSL communication and transmitted to the password management system 1110. Therefore, the risk of a malicious third party eavesdropping the device-specific information 233 while the device-specific information 233 of the account information operation terminal device 1230 is transmitted from the account information operation terminal device 1230 to the password management system 1110 via the network 1300 is extremely low.

### {Operation of Account Information in First Example}

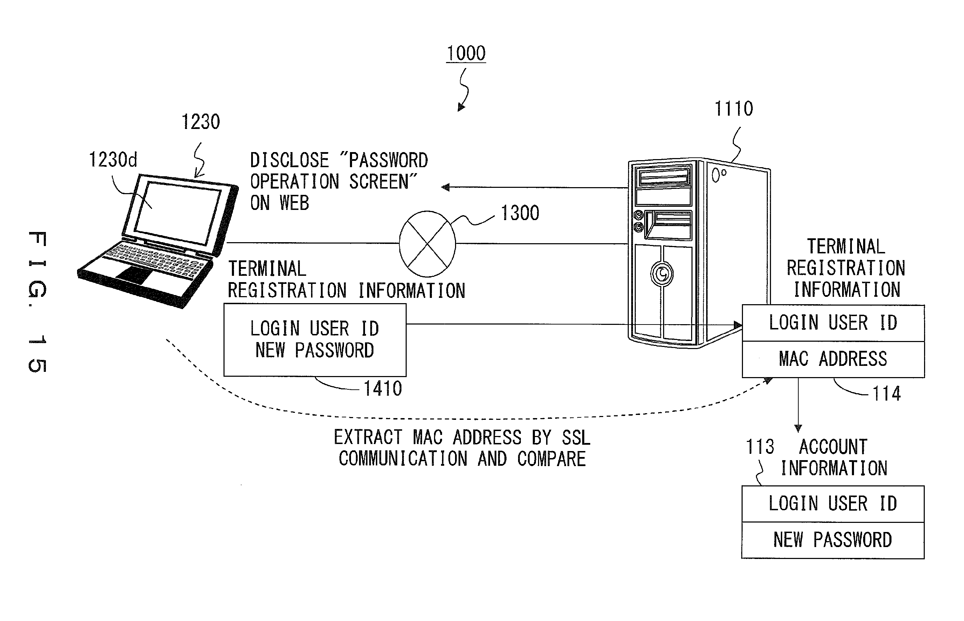

Figure 15 is a conceptual diagram showing an operation method of account information according to the first example. In Figure 15, the same constituent elements as the constituent elements shown in Figure 11 are provided with the same reference numerals. The computer system 1000 shown in Figure 15 includes the account information operation terminal device 1230, the password management system 1110, and the network 1300 connecting the account information operation terminal device 1230 and the password management system 1110. The account information operation terminal device 1230 and the password management system 1110 can mutually communicate via the network 1300.

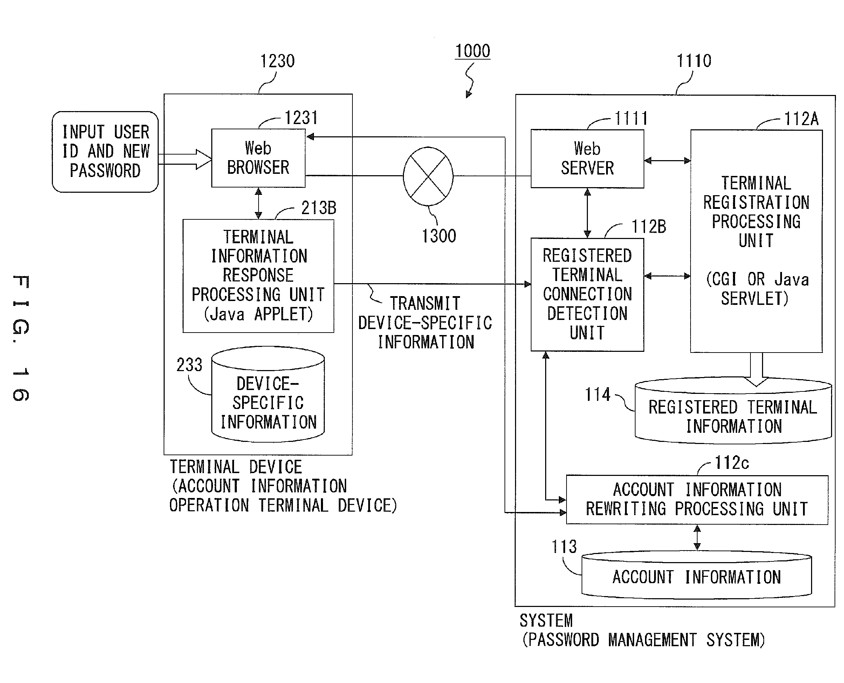

Figure 16 is a diagram showing a configuration of the computer system 1000 when the account information operation terminal device 1230 is used to operate the account information (password in this example) of the data operation terminal device 210 registered in the password management system 1110. In Figure 16, constituent elements with the same functions as the constituent elements included in the computer system 100 shown in Figure 4 are provided with the same reference numerals, and the constituent elements will be simply described or will not be described.

The password management system 1110 includes the Web server 1111, the terminal registration processing unit 112A, the registered terminal connection detection unit 112B, the account information rewriting processing unit 112C, the account information 113, and the terminal registration information 114. The Web server 1111 is a server disclosed on the Web. The Web server 1111 executes, for example, a process of disclosing, on the Web, a "password operation screen" for the user to rewrite the password of the data operation terminal device 210 that the user has forgotten. The Web server 1111 communicates with the Web browser 1231 via the network 1300 based on a protocol, such as HTTP and HTTPS. The network 1300 is, for example, the Internet. The terminal registration processing unit 112A is, for example, CGI (Common Gateway Interface) or Java Servlet. As shown in Figure 11, the terminal registration information 114 includes, for example, the "login user ID" and the "password".

The account information operation terminal device 1230 includes the Web browser 1231, the terminal information response processing unit 231B, and the device-specific information 233. The Web browser 1231 is browsing software equivalent to the account operation terminal registration processing unit 231A of Figure 4. The terminal information response processing unit 231B transmits the device-specific information 233 of the device to the registered terminal connection detection unit 112B of the password management system 1110 via the network 1300. The terminal information response processing unit 231B is, for example, Java Applet.

A procedure of the operation method of the account information according to the first example will be described with reference to Figures 15 and 16.
(1) The password management system 1110 prepares the Web server 1111 and uses the Web browser 1231 mounted on the account information operation terminal device 1230 to cause the Web server 1111 to disclose (Web disclosure) the "password operation screen" for the user to operate the password of the data operation terminal device 210 registered in the password management system 110.
(2) If the user forgets the password of the data operation terminal device 210, the user accesses the password operation screen disclosed by the Web server 1111 from the account information operation terminal device 1230 registered on the account operation terminal registration screen. Details of the password operation screen will be described later.
(3) The user inputs the login user ID and a new password from the password operation screen displayed on the display unit 1230d of the account information operation terminal device 1230. At this point, the Web browser 1231 automatically downloads the terminal information response processing unit 231B implemented by Java Applet from the password management system 1110. The terminal information response processing unit 231B acquires the device-specific information 233 (MAC address in the example of Figure 15) of the account information operation terminal device 1230 and transmits the device-specific information 233 to the registered terminal connection detection unit 112B of the password management system 1110 by SSL communication via the network 1300. To delete the password, the user designates "blank" as a new password on the password operation screen. Therefore, the user inputs a blank upon input of a new password.
(4) The terminal registration processing unit 112A of the password management system 1110 receives the device-specific information 233 of the account information operation terminal device 1230 from the registered terminal connection detection unit 112B. The terminal registration processing unit 112A also receives the "login user ID" and the "new password" inputted on the password operation screen by the user of the account information operation terminal device 1230 from the Web server 1111.
   The terminal registration processing unit 112A determines whether the account information operation terminal device 1230 that has accessed the password operation screen is registered in the system based on the "device-specific information 233" received from the registered terminal connection detection unit 112B and the "login user ID" received from the Web server 1111. More specifically, the terminal registration processing unit 112A checks whether the device-specific information 233 and the device-specific information 233 including the login user ID are registered in the system based on the device-specific information 233 extracted from the account information operation terminal device 1230 and the login user ID inputted by the user through the password operation screen.
(5) If the account information operation terminal device 1230 is registered in the system, the password management system 1110 uses the account information operation terminal device 1230 to receive a password changing request (or a password deletion request) requested by the user and rewrites the account information 113. The password management system 1110 also displays a message of normal reception on the password operation screen displayed on the display unit 1230d of the account information operation terminal device 1230. On the other hand, if the account information operation terminal device 1230 is not registered in the system, the password management system 1110 uses the account information operation terminal device 1230 to deny the password changing request requested by the user and displays a message of reception denial on the password operation screen displayed on the display unit 1230d of the account information operation terminal device 1230.

### {Password Operation Screen}

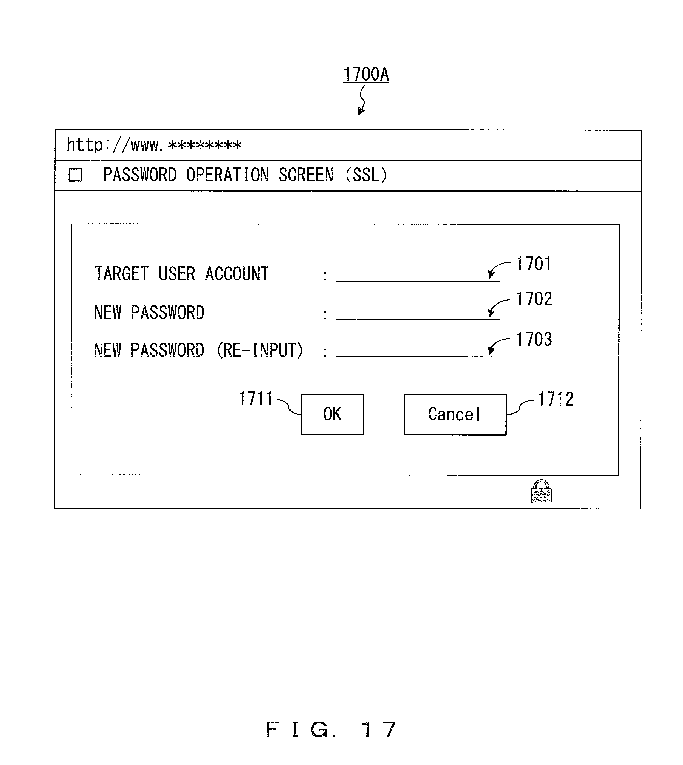

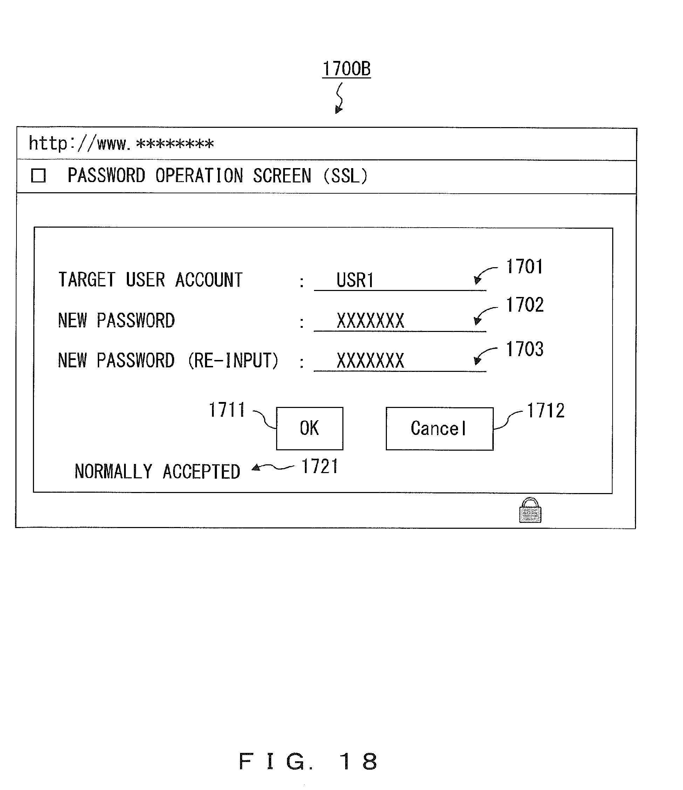

An example of display of the account password operation screen will be described with reference to Figures 17 and 18. Figure 17 shows an initial display of a password operation screen (initial display) 1700A, and Figure 18 shows a result display of a password operation screen (result display) 1700B. The Web browser 1231 displays the password operation screen (initial display) 1700A and the password operation screen (result display) 1700B on the display unit 1230d of the account information operation terminal device 1230.

### <Password Operation Screen (Initial Display)>

Figure 17 is a diagram showing the password operation screen (initial display) 1700A displayed on the display unit 1230d of the account information operation terminal device 1230 by the Web browser 1231.

The password operation screen (initial display) 1700A shown in Figure 17 includes a target user account input field 1701, a new password input field 1702, a new password re-input field 1703, an OK button 1711, a Cancel button 1712, and the like.

The target user account input field 1711 is a field for inputting the login user ID of the user. The new password input field 1702 is a field for inputting a password (new password) that the user wants to newly register in the password management system 1110. The new password re-input field 1703 is a field for re-inputting the password inputted to the new password input field 1702 by the user and is arranged to allow the user to surely register the new password. To delete the password registered in the password management system 1110, the user inputs "blank" in the new password input field 1702 and the new password re-input field 1703. In this case, if the new password input field 1702 and the new password re-input field 1703 are initially set to blank, the user can skip the input to the new password input field 1702 and the new password re-input field 1703 and just click the OK button 1711 to perform an operation of deleting the password. If the new password received from the account information operation terminal device 1230 is blank, the password management system 1110 deletes the password of the user registered in the system.

The OK button 1711 is a button for confirming the password inputted to the new password input field 1702. The Cancel button 1712 is a button for cancelling the password inputted to the new password input field 1702. If the user inputs, to the new password re-input field 1703, a password different from the password inputted to the new password input field 1702, an error message is displayed at a predetermined position of the password operation screen (initial display) 1700A.

An operation method for the user to change or delete the password of the user registered in the password management system 1110 through the password operation screen displayed on the display unit 1230d of the account information operation terminal device 1230 will be described.

To change or delete the password registered in the password management system 1110, the user performs an operation for the password operation screen with the following procedure.
The user inputs the login user ID of the user registered in the password management system 1110 to the target user account input field 1501 of the password operation screen (initial display) 1700A and inputs a password to be newly registered in the password management system 1110 to the new password input field 1702 and the new password re-input field 1703. The user then clicks the OK button 1711.

When the user correctly performs the password changing operation on the password operation screen (initial display) 1700A, the password management system 1110 checks whether the account information operation terminal device 1230 that has accessed the password operation screen (initial display) 1700A is registered in the system. If the account information operation terminal device 1230 is registered in the system, the password management system 1110 receives a change operation or a deletion operation of the password of the user on the password operation screen (initial display) 1700A. The password management system 1110 then causes the Web server 1111 to display the password operation screen (result display) 1700B shown in Figure 18 on the display unit 1230d of the account information operation terminal device 1230.

### <Password Operation Screen (Result Display)>

The password operation screen (result display) 1700B shown in Figure 18 illustrates an example in which "USER1" is inputted to the target user account input field 1701, and "XXXXXX" is inputted to the new password input field 1702 and the new password re-input field 1703 on the password operation screen (initial display) 1700A shown in Figure 17. In this case, the password management system 1110 displays a message 1721 of "Normally Accepted" at the lower left of the OK button 1711 of the password operation screen (result display) 1700B. Meanwhile, if the account information operation terminal device 1230 that has accessed the password operation screen (initial display) 1700A is not registered in the system, the password management system 1110 denies the operation of password change or password deletion on the password operation screen (initial display) 1700A. In this case, the password management system 1110 displays, for example, a message of denial of reception on the password operation screen (result display).

In this way, as the message 1721 of reception approval is displayed on the password operation screen (result display) 1700B, the user of the account information operation terminal device 1230 can check that the operation of "password change" or "password deletion" is normally completed.

In the case of an operation (password change or password deletion) of the account information 113, a frame similar to the frame 1400 of Figure 14 is also transmitted from the terminal information response processing unit 231B of the account information operation terminal device 1230 to the registered terminal connection detection unit 112B of the password management system 1110 by SSL communication.

If the operation (password change or password deletion) of the account information is received by the password management system 1110 (if the password operation screen (result display) 1700B is displayed), the "login user ID" and the "new password" inputted by the user on the password operation screen (initial display) 1700A are transmitted as an account information operation request from the Web browser 1231 of the account information operation terminal device 1230 to the Web server 1111 of the password management system 1110 by SSL communication.

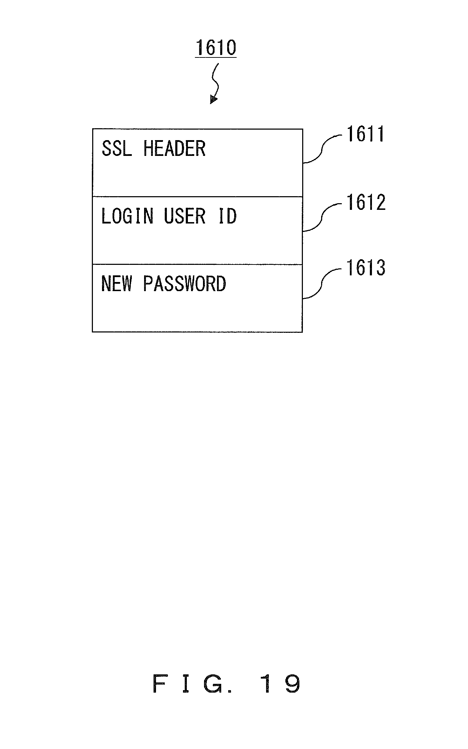

Figure 19 is a diagram showing a format of an account information operation request frame transmitted from the Web browser 1231 of the account information operation terminal device 1230 to the Web server 1111 of the password management system 1110 by SSL communication.

An account information operation request frame 1610 shown in Figure 19 includes an SSL header 1611, a login user ID 1612, and a new password 1613. The SSL header 1611 is a header defined by the protocol of the SSL communication. The login user ID 1612 is encoded data of the login user ID inputted by the user on the password operation screen (initial display) 1700A. The new password 1613 is encoded data of the new password inputted by the user on the password operation screen (initial display) 1700A. The login user ID 1612 and the new password 1613 can be obtained, for example, through encoding by a common key generated by the Web browser 1231.

In this way, the login user ID and the new password inputted by the user through the account information operation terminal device 1230 is encoded by SSL communication and transmitted to the password management system 1110. Therefore, the risk of a malicious third party stealing or intercepting the login user ID and the new password inputted by the user through the account information operation terminal device 1230 during transmission from the account information operation terminal device 1230 to the password management system 1110 via the network 1300 is extremely low.

### {Hardware Configuration of First Example}

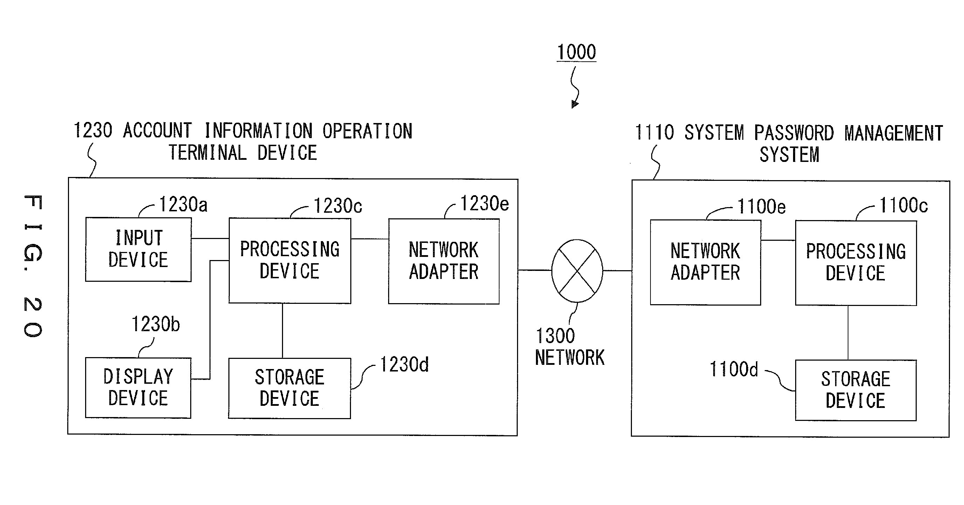

Figure 20 is a diagram showing a hardware configuration of the computer system 1000 of Figures 12 and 16. In Figure 20, the same constituent elements as the hardware constituent elements of Figures 12 and 16 are provided with the same reference numerals.

The computer system 1000 shown in Figure 20 includes the account information operation terminal device 1230, the password management system 1110, and the network 1300 that connects communication between the account information operation terminal device 1230 and the password management system 1110.

The account information operation terminal device 1230 includes an input device 1230a, a display device 1230b, a processing device 1230c, a storage device 1230d, and a network adapter 1230e.

The input device 1230a includes a pointing device, such as a keyboard and a mouse. The input device 1230a is used by the user to input the login user ID and passwords (such as registered password and new password) on the account operation terminal registration screen 1500, the password operation screen (initial display) 1700A, and the like displayed on the display device 1230b of the account information operation terminal device 1230 or to click the OK button, the Cancel button, and the like on the account operation terminal registration screen 1500, the password operation screen (initial display) 1700A, and the like.

The display device 1230b is, for example, a liquid crystal display and a CRT display.
The display device 1230b is used for the Web browser 1231 to display the account operation terminal registration screen 1500, the password operation screen (initial display) 1700A, the password operation screen (result display) 1700B, and the like.

The processing device 1230c includes a CPU (Central Processing Unit), a cache memory, and the like. The processing device 1230c executes programs (software) of the Web browser 1231, the terminal information response processing unit 231B, and the like.

The storage device 1230d includes, for example, a ROM (Read Only Memory), an EEPROM (Electrically Erasable and Programmable Read Only Memory), a RAM (Random Access Memory), and the like. The storage device 1230d stores the device-specific information 233 of the account information operation terminal device 1230, programs (software) executed by the processing device 1230c, and the like.

The network adapter 1230e is a network interface device that connects the account information operation terminal device 1230 to the network 1300. The network adapter 1230e includes an NIC (Network Interface Card) and the like.

The password management system 1110 includes a processing device 1110c, a storage device 1110d, a network adapter 1110e, and the like.
The processing device 1110c includes a CPU, a ROM, a RAM, and the like. The processing device 1110c executes programs (software) of the Web server 1111, the terminal registration processing unit 112A, the registered terminal connection detection unit 112B, the account information rewriting processing unit 112C, and the like.

The storage device 1110d is, for example, an HDD (Hard Disk Drive) and an SSD (Solid State Drive). The storage device 1110d stores the account information 113, the registered terminal information 114, and the like.

The network adapter 1110e is a network interface device that connects the password management system 1110 to the network 1300.

### [Second Example]

To prohibit the use by people other than the authorized user in the PC (personal computer), a method of setting a BIOS password (power-on password) is known. The BIOS password is a password queried on the screen upon the activation of the PC, and the PC cannot be activated if the password cannot be answered. The BIOS password is designated, for example, on a BIOS setup screen. Initialization of the BIOS password is not easy, and the BIOS password cannot be usually initialized in a note PC unless the manufacturer repairs the note PC.

### {Summary of Configuration of Second Example}

In a second example, the present invention is applied to the setting of the BIOS password.

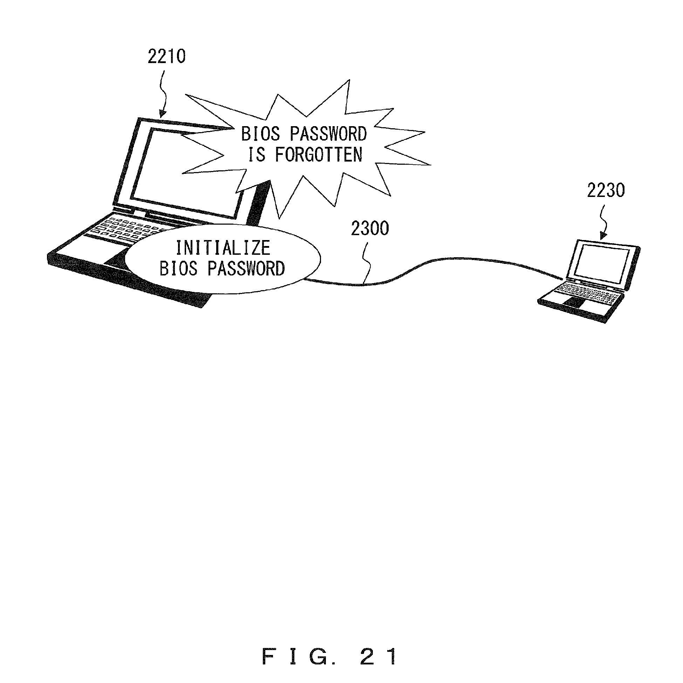

Figure 21 is a conceptual diagram showing a schematic configuration of the second example.

In Figure 21, a BIOS password setting terminal device 2210 is a note PC in which a BIOS password is set. In the second example, another terminal device 2230 (BIOS password operation terminal device 2230) that can access the BIOS password of the terminal device, in which the BIOS password is set as in the BIOS password setting terminal device 2210, is registered in advance. If the BIOS password of the BIOS password setting terminal device 2210 is forgotten, the BIOS password operation terminal device 2230 is connected to the BIOS password setting terminal device 2210 to initialize the BIOS password of the BIOS password setting terminal device 2210 from the BIOS password operation terminal device 2230. In the second example, even if the BIOS password setting terminal device 2210 with the BIOS password set is stolen, there is no fear of breaking the BIOS password set in the BIOS password setting terminal device 2210 if the BIOS password operation terminal device 2230 that can access the BIOS password is managed in another location.

A configuration and an operation of the second example will be described.

### {Registration of BIOS Password Operation Terminal Device}

In a typical note PC, the BIOS password is recorded in the EEPROM, and whether the BIOS password is set to the note PC is checked once the power of the note PC is on. If the BIOS password is set, the note PC displays a screen (BIOS password input screen) for querying the password. In the second example, when the BIOS password is inputted and set to the BIOS password operation terminal device 2230 (for example, note PC), the device-specific information of the BIOS password operation terminal device is registered in the note PC along with the BIOS password.

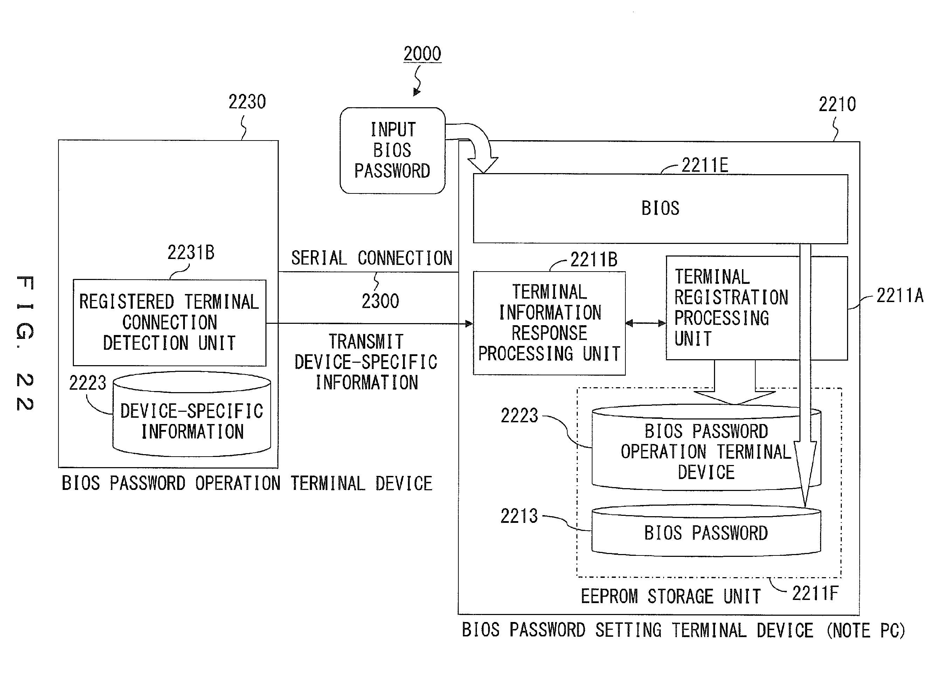

Hereinafter, a registration method of the BIOS password operation terminal device in the second example will be described with reference to Figure 22.
Figure 22 is a diagram showing a system configuration upon the registration of the BIOS password operation terminal device according to the second example.

A system 2000 shown in Figure 22 includes the BIOS password operation terminal device 2230, the BIOS password setting terminal device 2210, and a cable (serial communication cable) 2300 that connects a serial port (not shown) of the BIOS password operation terminal device 2230 and a serial port (not shown) of the BIOS password setting terminal device 2210. The BIOS password operation terminal device 2230 and the BIOS password setting terminal device 2210 perform serial communications via the serial communication cable 2300.

The BIOS password operation terminal device 2230 includes a terminal information response processing unit 2231B and device-specific information 2233. The device-specific information 2233 is, for example, a serial number or UUID of the BIOS password operation terminal device 2110 and is information specific to the device that cannot be set or changed by the operator of the BIOS password operation terminal device 2110. The device-specific information 2233 is held in a storage device (for example, ROM) in the BIOS password operation terminal device 2110. The terminal information response processing unit 2231B transmits the device-specific information 2233 to the BIOS password setting terminal device 2210 via the serial communication cable 2300.

The BIOS password setting terminal device 2210 includes a terminal registration processing unit 2112A, a registered terminal connection detection unit 2112B, a BIOS 2211E, and a storage unit 2211F.
The terminal registration processing unit 2112A stores a BIOS password 2213 notified from the registered terminal connection detection unit 2112B in the storage unit 2211F. The registered terminal connection detection unit 2112B extracts and acquires, via the serial communication cable 2300, the device-specific information 2233 of the BIOS password operation terminal device 2230 connected to the device through the serial communication cable 2300. In the extraction of the BIOS password, the registered terminal connection detection unit 2112B receives the BIOS password from the terminal information response processing unit 2231B of the BIOS password operation terminal device 2230 via the serial communication cable 2300.

The BIOS 2211E is a basic input/output system and displays a BIOS password setting screen on a display unit (not shown) of the device when the BIOS password setting terminal device 2210 is activated. The BIOS 2211E stores the BIOS password in the storage unit 2211F when the BIOS password is inputted on the BIOS password setting screen.

The storage unit 2211F is a storage device that stores the BIOS password 2213 of the BIOS password setting terminal device 2210 and the device-specific information 2233 of the BIOS password operation terminal device 2230. The storage unit 2211F is, for example, a data-rewritable memory such as an EEPROM.

### {Registration of BIOS Password Operation Terminal Device}

A processing procedure of registering the BIOS password of the BIOS password setting terminal device 2210 and the BIOS password operation terminal device 2230 in the BIOS password setting terminal device 2210 in the system 2000 shown in Figure 22 will be described. In the second example, the device-specific information 2233 of the BIOS password operation terminal device 2230 is registered in the BIOS password setting terminal device 2210 to register the BIOS password operation terminal device 2230.
(1) The BIOS password setting terminal device 2210 is activated, and the BIOS password of the BIOS password setting terminal device 2210 is set. The BIOS password is set with the following procedure.
   Step S201: The BIOS 2211E displays the BIOS password setting screen.
   Step S202: The user inputs the BIOS password on the BIOS password setting screen and performs an operation of confirming the input.
   Step S203: The BIOS 2211E stores the BIOS password (BIOS password 2213) inputted on the BIOS password setting screen in the storage unit 2211F.
(2) If the terminal information response processing unit 2231B is not mounted on the BIOS password operation terminal device 2230, the terminal information response processing unit 2231B (program) is installed on the BIOS password operation terminal device 2230.
(3) The BIOS password operation terminal device 2230 is registered in the BIOS password setting terminal device 2210. The BIOS password operation terminal device 2230 is registered with the following procedure.
Step S211: A message prompting the connection of the BIOS password operation terminal device 2230 is displayed on the display unit of the BIOS password setting terminal device 2210. Step S212: The BIOS password operation terminal device 2230 and the BIOS password setting terminal device 2210 are connected by the serial communication cable 2300, and a confirmation key of the input unit (not shown) is pressed. Step S213: The registered terminal connection detection unit 2112B of the BIOS password setting terminal device 2210 requests the terminal information response processing unit 2231B of the BIOS password operation terminal device 2230 to transmit the device-specific information 2233 of the BIOS password operation terminal device 2230.
Step S214: The terminal information response processing unit 2231B of the BIOS password operation terminal device 2230 transmits the device-specific information 2233 of the device to the registered terminal connection detection unit 2112B of the BIOS password setting terminal device 2210.
Step S215: The registered terminal connection detection unit 2112B of the BIOS password setting terminal device 2210 notifies the terminal information response processing unit 2231B of the device-specific information 2233 received from the terminal information response processing unit 2231B. Step S216: The terminal information response processing unit 2231B of the BIOS password setting terminal device 2210 stores the device-specific information 2233 received from the registered terminal connection detection unit 2112B in the EEPROM 2211F.

As a result of the process, the BIOS password 2213 of the BIOS password setting terminal device 2210 and the device-specific information 2233 of the BIOS password operation terminal device 2230 are registered in the EEPROM 2211F of the BIOS password setting terminal device 2210.

### {Reset of BIOS password of BIOS Password Setting Terminal Device by BIOS Password Operation Terminal Device}

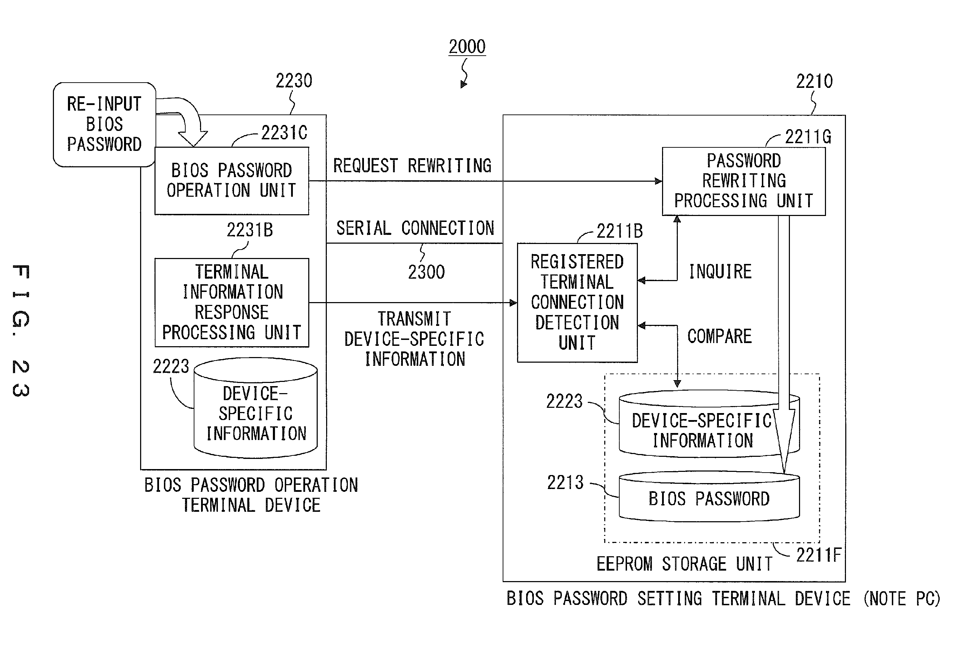

Figure 23 is a diagram showing a configuration of the system 2000 when the BIOS password of the BIOS password setting terminal device 2210 is reset. In Figure 23, the same constituent elements as the constituent elements shown in Figure 22 are provided with the same reference numerals.

The BIOS password setting terminal device 2210 includes the registered terminal connection detection unit 2112B, the EEPROM 2211F, and a password rewriting processing unit 2211G.
If there is a terminal device connected to the device via the serial communication cable 2300, the registered terminal connection detection unit 2112B requests the terminal device to transmit the device-specific information 2233. When the device-specific information transmitted by the terminal device connected to the device is received via the serial communication cable 2300, the registered terminal connection detection unit 2112B checks whether the received device-specific information is registered in the EEPROM 2211F. If the received device-specific information is registered in the EEPROM 2211F, the registered terminal connection detection unit 2112B determines that the terminal device connected to the device is the BIOS password setting terminal device 2210 that has authorization to rewrite the BIOS password of the device.

The password rewriting processing unit 2211G receives a BIOS password rewriting request via the serial communication cable 2300 from the terminal device connected to the device via the serial communication cable 2300. The password rewriting processing unit 2211G queries the registered terminal connection detection unit 2112B whether the terminal device that has transmitted the BIOS password rewriting request is the BIOS password operation terminal device 2230 registered in the device. If a response indicating that the terminal device that has transmitted the BIOS password rewriting request is the BIOS password operation terminal device 2230 registered in the device is obtained from the registered terminal connection detection unit 2112B, the password rewriting processing unit 2211G rewrites the BIOS password 2213 of the device stored in the EEPROM 2211F in accordance with the BIOS password rewriting request from the BIOS password operation terminal device 2230.

The BIOS password operation terminal device 2230 includes the terminal information response processing unit 2231B, a BIOS password operation unit 2331C, and the device-specific information 2233.
The BIOS password operation unit 2331C is equivalent to the account information operation processing unit 231C of the first example. The BIOS password operation unit 2331C transmits the BIOS password rewriting request inputted to the device by the user to the password rewriting processing unit 2211G of the BIOS password setting terminal device 2210 via the serial communication cable 2300.
The BIOS password rewriting request is a request for rewriting the current BIOS password of the BIOS password setting terminal device 2210 with the BIOS password re-inputted by the user (to the BIOS password operation terminal device 2230).

To reset the BIOS password of the BIOS password setting terminal device 2210, the user connects the BIOS password operation terminal device 2230 registered in advance in the BIOS password setting terminal device 2210 to the BIOS password setting terminal device 2210 via the serial communication cable 2300. The display unit (not shown) and the input unit (not shown) of the BIOS password operation terminal device 2230 are used to input, to the BIOS password operation terminal device 2230, the BIOS password to be reset to the BIOS password setting terminal device 2210.

When the user inputs the resetting BIOS password of the BIOS password setting terminal device 2210 as described above, the BIOS password operation unit 2331C transmits the BIOS password rewriting request to the password rewriting processing unit 2211G of the BIOS password setting terminal device 2210 via the serial communication cable 2300.

### {Summary of Resetting Method of BIOS Password of BIOS Password Setting Terminal Device by BIOS Password Operation Terminal Device}

A summary of a method of using the BIOS password operation terminal device 2230 to reset the BIOS password of the BIOS password setting terminal device 2210 will be described.
(1) To reset the BIOS password of the BIOS password setting terminal device 2210, the user connects the BIOS password operation terminal device 2230 registered in advance (in the BIOS password setting terminal device 2210) to the BIOS password setting terminal device 2210 via the serial communication cable 2300 and turns on the power of the BIOS password setting terminal device 2210.
(2) The BIOS password setting terminal device 2210 displays the BIOS password input screen through the BIOS 2211E and enters an input waiting state of the BIOS password. In the BIOS password setting terminal device 2210, the registered terminal connection detection unit 2112B checks whether a terminal device is connected to the device via the serial communication cable 2300.
(3) If there is a terminal device connected to the device via the serial communication cable 2300, the registered terminal connection detection unit 2112B in the BIOS password setting terminal device 2210 extracts the device-specific information of the terminal device connected to the device. The registered terminal connection detection unit 2112B compares the extracted device-specific information to all device-specific information 2233 stored in the EEPROM 2211 to determine whether the terminal device connected to the device is the BIOS password operation terminal device 2230 registered in the device.
(4) The user activates the BIOS password operation unit 2331C of the BIOS password operation terminal device 2230 connected to the BIOS password setting terminal device 2210 and executes the BIOS password operation rewriting process through the BIOS password operation unit 2331C. The BIOS password operation unit 2331C generates a BIOS password rewriting request based on the re-input of the BIOS password of the BIOS password setting terminal device 2210 by the user and transmits the BIOS password rewriting request to the password rewriting processing unit 2211G of the BIOS password setting terminal device 2210.
(5) If it is determined that the terminal device connected to the device is the BIOS password operation terminal device 2230 registered in the device in the determination of (3), the BIOS password setting terminal device 2210 accepts the BIOS password rewriting request received from the BIOS password operation unit 2331C. The BIOS password setting terminal device 2210 then rewrites the BIOS password of the BIOS password setting terminal device 2210 stored in the EEPROM 2211F with the BIOS password designated in the BIOS password rewriting request to finish the process.
(6) The user then reactivates (power OFF/ON) the BIOS password setting terminal device 2210. Once the BIOS password setting terminal device 2210 displays the BIOS password input screen, the user inputs the reset BIOS password on the BIOS password input screen and activates the BIOS password setting terminal device 2210.

### {Processing Procedure of Resetting Method of BIOS Password of BIOS Password Setting Terminal Device by BIOS Password Operation Terminal Device}

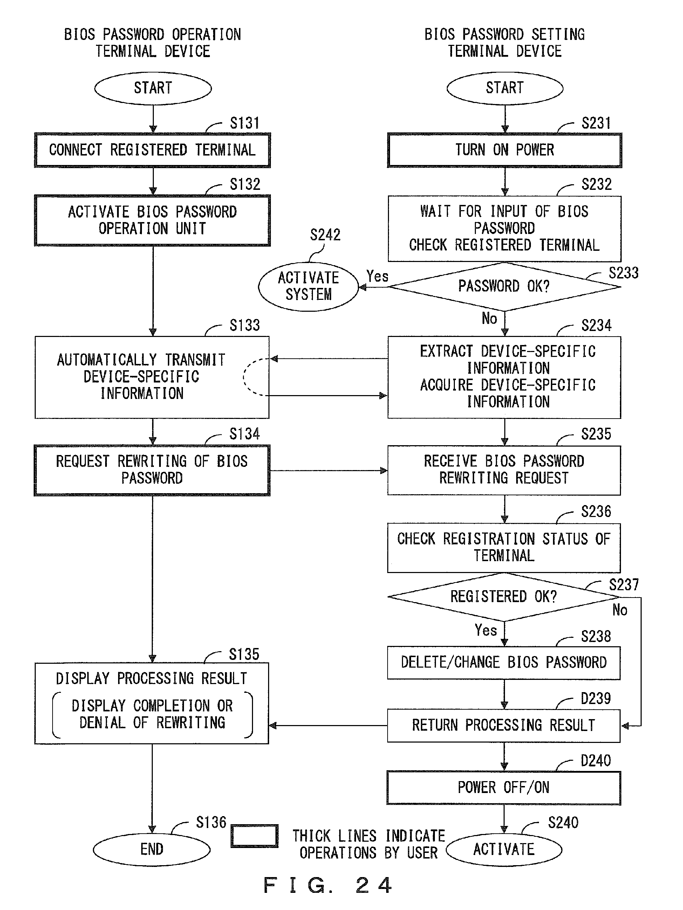

Figure 24 is a flow chart showing a procedure of a process for resetting the BIOS password of the BIOS password setting terminal device 2210 by the BIOS password operation terminal device 2230. In Figure 24, the left side is a flow chart showing a processing procedure of the BIOS password operation terminal device 2230, and the right side is a flow chart showing a processing procedure of the BIOS password setting terminal device 2210.

A procedure of a process for resetting the BIOS password of the BIOS password setting terminal device 2210 using the BIOS password operation terminal device 2230 will be described with reference to Figure 24.

To reset the BIOS password of the BIOS password setting terminal device 2210, the user connects the BIOS password operation terminal device 2230 registered in advance (in the BIOS password setting terminal device 2210) to the BIOS password setting terminal device 2210 via the serial communication cable 2300 (step S131). The user then starts up the BIOS password operation terminal device 2230 and activates the BIOS password operation unit 2331C (step S132).

The user turns on the power of the BIOS password setting terminal device 2210 (step S231). The BIOS password setting terminal device 2210 displays the BIOS password input screen on the display unit (not shown) through the BIOS 2211E and enters the input waiting state of the BIOS password. The registered terminal connection detection unit 2112B in the BIOS password setting terminal device 2210 checks whether the BIOS password operation terminal device 2230 connected to the device is the BIOS password operation terminal device 2230 registered in the device (step S232).

The BIOS password setting terminal device 2210 determines whether the password inputted by the user (input password of the user) on the BIOS password input screen is OK, i.e., whether the input password of the user coincides with the BIOS 2211E stored in the EEPROM 2211F (step S233).

If the BIOS 2211E determines that the input password of the user is OK in step S233 (step S233, Yes), the BIOS password setting terminal device 2210 activates the system (step S242). On the other hand, if the BIOS 2211E determines that the password of the user inputted to the BIOS password input screen is not correct in step S233 (step S233, No), the BIOS password setting terminal device 2210 advances the process to step S234.

The BIOS password setting terminal device 2210 communicates with the terminal information response processing unit 2231B of the BIOS password operation terminal device 2230 through the registered terminal connection detection unit 2112B in step S234 to extract and acquire the device-specific information 2233 of the BIOS password operation terminal device 2230.

When a transmission request of the device-specific information of the device is received from the registered terminal connection detection unit 2112B of the BIOS password setting terminal device 2210, the terminal information response processing unit 2231B in the BIOS password operation terminal device 2230 transmits the device-specific information 2233 of the device to the registered terminal connection detection unit 2112B of the BIOS password setting terminal device 2210 (step S133).

When the user re-inputs the BIOS password in the BIOS password operation terminal device 2230, the BIOS password operation unit 2331C generates a request (BIOS password rewriting request) for rewriting the current BIOS password of the BIOS password setting terminal device 2210 with the BIOS password re-inputted by the user. The BIOS password operation unit 2331C transmits the BIOS password rewriting request to the password rewriting processing unit 2211G of the BIOS password setting terminal device 2210 (step S134).

The password rewriting processing unit 2211G of the BIOS password setting terminal device 2210 receives the BIOS password rewriting request transmitted from the BIOS password operation unit 2331C of the BIOS password operation terminal device 2230 (step S235).

The registered terminal connection detection unit 2112B compares the device-specific information 2233 of the BIOS password operation terminal device 2230 acquired in step S234 to all device-specific information 2233 stored in the EEPROM 2211F to check the registration status of the BIOS password operation terminal device 2230 connected to the device (step S236) and determines whether the BIOS password operation terminal device 2230 connected to the device is registered in the device (step S237).

If the registered terminal connection detection unit 2112B determines that the BIOS password operation terminal device 2230 connected to the device is registered in the device (step S237, Yes), the registered terminal connection detection unit 2112B transmits the fact to the password rewriting processing unit 2211G.

When the notification indicating that the BIOS password operation terminal device 2330 connected to the device is registered in the device is received from the registered terminal connection detection unit 2112B, the password rewriting processing unit 2211G performs "deletion/change of BIOS password" for rewriting the BIOS password of the device with the password designated in the BIOS password rewriting request received in step S235 (step S238) and advances the process to step S239.

If the registered terminal connection detection unit 2112B determines that the BIOS password operation terminal device 2230 connected to the device is not registered in the device in step S237 (step S237, No), the process proceeds to step S239.

In step S239, the password rewriting processing unit 2211G returns a processing result for the BIOS password rewriting request received in step S235 to the BIOS password operation terminal device 2230 connected to the device. The processing result transmitted to the BIOS password operation terminal device 2230 in step S239 is "rewriting of BIOS password completed" or "BIOS password rewriting request denied".

When the processing result for the BIOS password rewriting request is received from the BIOS password setting terminal device 2210, the BIOS password operation terminal device 2230 displays the content of the processing result on the display unit (not shown) (step S135) and ends the process (step S136).

When the process of step S239 is finished in the BIOS password setting terminal device 2210, the user temporarily turns off the power of the BIOS password setting terminal device 2210 and then turns on the power to activate the BIOS password setting terminal device 2210 (step S241).

As a result of the process, even if the user forgets the BIOS password of the BIOS password setting terminal device 2210, the BIOS password operation terminal device 2230 registered in advance in the BIOS password setting terminal device 2210 can be used to change or delete the BIOS password registered in the BIOS password setting terminal device 2210 in the second embodiment.

The present invention is not limited to the embodiment and the examples, and various changes can be made without departing from the scope of the present invention to carry out the present invention.

### Industrial Applicability

The present invention can be applied to portable terminal devices and the like, such as portable information terminals and cell phones in which the functions are predicted to be upgraded in the future.

## Claims

1. An access authentication method of an information processing system that performs login authentication by input of account information, the access authentication method comprising:
a step of registering, in the information processing system, registered terminal information for identifying a terminal device that can operate the account information;
a step of referencing the registered terminal information if there is an operation request of the account information from a terminal device to the information processing system and determining whether the registered terminal information of the terminal device indicates the terminal device registered in the information processing system; and
a step of permitting the terminal device to operate the account information managed by the information processing system if it is determined that the terminal device that has issued the operation request of the account information is the terminal device registered in the information processing system.

2. The access authentication method according to claim 1, wherein
only registered terminal information of one terminal is registered in the information processing system.

3. The access authentication method according to claim 1, wherein
a plurality of pieces of registered terminal information are registered in the information processing system.

4. The access authentication method according to claim 1, wherein
the registered terminal information includes device-specific information specific to the terminal device.

5. The access authentication method according to claim 1, wherein
the information processing system comprises an information processing apparatus that is connected to the terminal device via a network and that provides a service to the terminal device.

6. The access authentication method according to claim 5, wherein
the registered terminal information further comprises device-specific information of the terminal device,
the terminal device comprises:
a terminal registration processing unit that designates the account information included in the registered terminal information to the information processing system and that transmits a request for registering the device as the terminal device to the information processing apparatus; and
a terminal information response processing unit that transmits the device-specific information of the device to the information processing system in response to the request from the information processing apparatus, and
the information processing apparatus comprises:
a device-specific information acquisition unit that acquires the device-specific information of the terminal device from a device-specific information notification unit of the terminal device; and
a terminal registration processing unit that receives the account information notified by the account information notification unit of the terminal device and that registers the registered terminal information based on the account information and the device-specific information acquired by the device-specific information acquisition unit.

7. The access authentication method according to claim 6, wherein
the device-specific information acquisition unit requests a device-specific information notification unit of the terminal device to transmit the device-specific information if the terminal device is connected to the device via the network.

8. The access authentication method according to claim 6, wherein
the information processing apparatus further comprises:
an account information operation processing unit that designates rewriting information of the account information to transmit a rewriting request of the account information to the device-specific information acquisition unit of the information processing system; and
an account information rewriting processing unit that receives the rewriting request of the account information from the account information operation processing unit,
the device-specific information acquisition unit of the information processing apparatus acquires the device-specific information of the terminal device that transmits the rewriting request of the account information from the terminal information response processing unit of the terminal device,
the terminal registration processing unit of the information processing system determines whether the terminal device that has transmitted the rewriting request of the account information is registered in the information processing system based on the device-specific information acquired by the device-specific information acquisition unit and the rewriting information of the account information included in the rewriting request of the account information received by the account information rewriting processing unit, and
the account information rewriting processing unit of the information processing system rewrites the account information registered in the information processing system based on the account information designated by the rewriting request of the account information if the terminal registration processing unit determines that the terminal device that has transmitted the rewriting request of the account information is registered in the information processing system.

9. The access authentication method according to claim 4, wherein
the device-specific information is a MAC address.

10. The access authentication method according to claim 4, wherein
the device-specific information is a serial number of the terminal device.

11. The access authentication method according to claim 4, wherein
the device-specific information is a UUID.

12. An information processing apparatus that performs login authentication by input of account information, the information processing apparatus comprising:
an account information registration unit that registers, in an information processing system, registered terminal information for identifying a terminal device that can operate the account information;
an account information determination unit that references the registered terminal information if there is an operation request of the account information from a terminal device to the information processing system and that determines whether the registered terminal information of the terminal device indicates the terminal device registered in the information processing system; and
an account information operation permission unit that permits the terminal device to operate the account information managed by the information processing system if it is determined that the terminal device that has issued the operation request of the account information is the terminal device.
